# EUROPEAN PATENT SPECIFICATION

(11) **EP 2 501 926 B1**
(45) Date of publication and mention of the grant of the patent: **17.08.2016**
(21) Application number: 10784738.6
(22) Date of filing: 15.11.2010
(51) Int. Cl.: F03B 13/18, F03B 13/20, F04B 17/00

(54) **PUMPS**
PUMPEN
POMPES

(30) Priority: 16.11.2009 GB 0919931
(43) Date of publication of application: 26.09.2012
(73) Proprietor: GORDON, Peter Cronin, Liverpool L25 5PA (GB)
(72) Inventor: GORDON, Peter Cronin, Liverpool L25 5PA (GB)
(74) Representative: Foster, Mark Charles
(86) International application number: PCT/EP2010/067502
(87) International publication number: WO 2011/058178

(56) References cited:
- EP-A1- 0 594 537
- GB-A- 2 054 756
- US-A- 3 839 983
- US-A- 4 531 063

## Description

The invention relates to pumps and more particularly to pumps suitable for being driven by energy from a natural source.

One form of such energy is the sea and the capture of energy from the sea and its conversion to usable power represents a major step towards providing a sustainable energy source for the developing and developed world. The usable power may be electricity but could be any form of usable power. In the UK it is predicted that wave power is capable of providing up to 17% of the total UK power requirement and substantially reducing UK carbon emissions.

Energy captured from the sea includes many forms such as sea-based wind power generators, wave energy converters and tidal energy converters.

Such energy capture systems can convert the energy captured from the sea into electrical power which can be linked to the national electrical grid system or into other electrical power generators, or into generating power for desalination plants or into storing potential energy such as filling land-based reservoirs which then can be used to drive electricity generators on demand.

Devices utilising energy captured from the sea are faced with a number of challenges. Some of these are as follows. The marine environment is extremely destructive in force and high sea states impose massive loading on rigid mechanical structures frequently leading to their failure. The marine environment is very corrosive and metallic materials will deteriorate rapidly. To survive the marine environment systems tend to be "over engineered" for strength leading to massive weight and cost burdens that carry a substantial carbon/energy toll. Building marine-based large, heavy energy converters places heavy tolls on the carbon/energy cycle and can be both wasteful and environmentally damaging. In the case of wind generation, the carbon/energy usage in the build of the wind generators frequently cannot be recovered within the total life cycle of the generator. Installations need to have limited impact on the environment and on the other activities taking place in their vicinity.

One of the greatest challenges to converting efficiently sea energy in the form of wave motion into electricity is that most wave power is available in low speed continually fluctuating, very high forces and the motion of those forces are not in a single direction. Most electricity generators operate at higher speeds and most turbines require a constant, steady unidirectional flow in order to operate efficiently. The energy in an ocean surface wave is directly proportional to its total mass and its speed (termed Gross Wave Power Density). So, for example, a large offshore 15 metre wave with a period of 12 seconds has an energy rating of 1.7 megawatts per metre of wave front whereas a 3 metre wave with a 7 second period will have wave energy rating in 36 kilowatts per metre of wave front.

EP 0 594 537 discloses a pump for converting wave energy. Flexible fibres are disposed around a fluid-tight hose. The fibres extend longitudinally. A plurality of rings extend circumferentially around the fluid-tight hose.

According to a first aspect of the invention, there is provided a pump as defined in claim 1.

According to a second aspect of the invention, there is provided a method of converting wave energy as defined in claim 15.

Thus the pump and method of the invention can be used to capture the energy of moving water and convert it efficiently into a flow of fluid which can be used to do useful work-for example electricity generation, driving pumps, driving sea water desalination plants or the pumping of water into reservoirs which then can be stored as a form of potential energy for future use.

This invention can thus achieve efficient conversion of energy into usable power by:-
- Using essentially non-rigid, non-metallic and flexible but extremely strong materials in the moving parts of the system that will withstand the severest offshore storm conditions.
- Using relatively lightweight and low cost materials with minimal energy/carbon consumption in their creation and operation.
- Using simple (low level) technologies that require no specialised knowledge to assemble and are suitable for developing countries requiring only a low level of technology capability.
- Having simple low cost installation requirements.
- Having minimal environmental and ecological impact with minimal conflict with other sea users, whether for commercial or recreational use.

The following are not claims but are preferred features of the pump as claimed.

The pump according to claim 1 or claim 2 may have the container (11) formed from a flexible polymeric material.

The flexible polymeric material may be a silicone or polyurethane or synthetic rubber.

The pump according to claim 2 may have the container (11) formed separately from the braid tube (12) as a bladder (11) and be surrounded by the braid tube (12).

In this case, a low-friction material may be located between the braid tube (12) and the bladder (11) and the braid tube (12) may be formed from a low-friction material.

The bladder (11) may have a length at least as great as the length of the bladder (11) when the braid tube (12) has a minimum diameter.

The bladder (11) may a diameter at least as great as the diameter of the bladder (11) when the braid tube (12) has a maximum diameter.

The container (11) may be formed in one-piece with the braid tube (12) and, in this case, the container (11) may be formed by coating the braid tube (12) with a flexible elastic material such as a polymeric material.

The container (11) preferably changes volume by a factor of at least 2.5 between the reduced diameter disposition and the increased diameter disposition.

In the pump of claim 4 and wherein the sea motion is heave, the float (101; 120; 217; 300; 301) may rise as the crest of a wave approaches the float to apply a force to the braid tube (12) to extend the braid tube (12) and falling after the wave crest has passed to remove the force.

The retractor (107) of claim 5 may be formed by one or more springs acting between the ends of the braid tube (12) and the or each spring may be a metal spring or a gas filled retractor. Alternatively, the retractor (107) may formed by the container (11), the container (11) being resiliently elastically deformed when extended and contracting to expand the braid tube (12) in the absence of an extending force from the float.

In the pump of claim 5, the inlet may be connected to a source of fluid under pressure, said fluid under pressure passing from said source through said inlet in the absence of an extending force from the float to expand the braid and refill the container (11).

The source of fluid under pressure may at least one further pump (10a) according to any one of the claims.

In the pump of claim 8, the reservoir (124) may comprise a flexible container (11) arranged between a float and a deadweight so that, when the reservoir (124) is disposed in the sea, the force generated between the float and the deadweight tends to contract the reservoir (124) and so pressurise the fluid within the reservoir (124).

In the pump of claim 7, the reservoir (130) may be flexible and be arranged between a mounting arranged to be fixed relative to the sea bed and a float that, in the sea, tends to collapse the reservoir (130) towards the mounting to pressurise the fluid in the reservoir (130).

In the pump of claim 10, the sleeve may include a retractor (109) that, in the absence of an extending force from the float, contracts the sleeve (108), the braid tube (12) and the container (11) to draw fluid into the container (11) through said inlet and expel fluid from the chamber outlet.

In the pump of claim 11, the first-mentioned braid tube (12) and container (11) may be connected between an upper mounting connected to an anchor (102) for anchoring on the sea bed and an intermediate mounting (111) may be connected to the float, the second braid tube (12) and container (11) be connected between the intermediate mounting (111) and an anchor for anchoring on the sea bed so that movement of the float in one direction extends one braid tube (12) and allows the other braid tube (12) to expand and movement of the float in an opposite direction extends the other braid tube (12) and allows the one braid tube (12) to expand.

In the pump of claim 9, the second braid tube (12) and container (11) may be arranged between and connected to an anchor and a float so that, when disposed in the sea with the anchor on the seabed and the float on the sea surface, a cyclical motion of the sea water successively extends the braid tube (12) and the container (11) and then allows the braid tube (12) and the container (11) to contact.

In this case, the second container (11) may have a fluid inlet and a fluid outlet and wherein the outlet of the first-mentioned container (11) is connected to the inlet of the second container (11) and the outlet of the second container (11) is connected to the inlet of the first-mentioned container (11) to allow the flow of fluid between the first-mentioned and second containers (11).

These first-mentioned and second braid tubes (12) and containers (11) may include respective first and second manifolds (223), each manifold (223) including a valved inlet and a valved outlet, each manifold being connected to an open lower end of the lower end of the associated braid tube (12) and container (11).

A plurality of further braid tubes (12) and containers (11) may be provided, each having a respective manifold (223), the manifolds (223) being in fluid connection. Each manifold may include a respective connection point for connection to an anchor a plurality of further braid tubes (12) and containers (11), each braid tube (12) and container (11) arranged between and connected to an anchor (102) and a float (120; 217; 300; 301; 308) so that, when disposed in the sea with the anchor on the seabed and the float on the sea surface, a cyclical motion of the sea water successively extends the braid tube (12) and the container (11) and then allows the braid tube (12) and the container (11) to contact.

Where there are a plurality of pumps, the pumps (10) may arranged in an array in the sea, each pump (10) being spaced from the next adjacent pump (10).

The array may include at least one column of pumps (10), the or each column extending parallel to the length of the ambient waves. The array may include at least one row of pumps (10), the or each row extending normal to the length of the ambient waves. The array may include a plurality of angularly spaced lines of pumps (10), each line of pumps extending radially from a single centre.

Each pump (10) of such an array may include a respective generator (248), each pump driving the associated generator (248) All the pumps of the array may be in fluid connection with a single generator (121), fluid from the pumps of the array diving the generator (121).

In a pump according to claim 13 for use in sea surge, the member (308) may be generally vertical and the pivot axis may be adjacent the sea bed, the pump (10) being connected between an upper end of the member (308) and an anchor.

In a pump according to claim 13 for use in sea pitch and/or in sea pitch and heave, the member may include an elongate portion (305a, 305b) extending in a direction parallel to but spaced from the pivot axis, the axis being provided at an upper end of a generally vertical support (307) extending from the sea bed, the member also including at least one arm (306a, 306b) connecting the portion to the axis, the pump (10) being connected between the portion and an anchor.

In a pump according to claim 13 for use in a stream of water, the member may include a hydrofoil (356) over which, in use, the stream flows to create lift, the hydrofoil (356) being mounted for rotation about said axis and being controllable to rise and fall in said stream, said rising and falling extending and allowing contraction of the braid tube (12) and the container (11).

In a pump according to claim 15, the buoyant member may comprise a wall (311) formed by a plurality of parallel spaced elongate buoyant sections. In this case, the buoyant member (301) may comprise a central member (302) and a plurality of outer members (303), each outer member (303) being parallel to the central member (302) and radially spaced therefrom.

The pump of claim 1 may be combined with a store (321; 333; 339), the store receiving fluid under pressure from the or each pump and holding said fluid under pressure, the fluid being able to be outputted from the store to provide a source of pressurised fluid.

In this case, the store may be for location underwater, the store comprising a chamber (322; 333; 10) that can collapse and extend, a float (325, 334; 341) tending to collapse the chamber to hold fluid in the chamber under pressure.
In any embodiment of the invention, the fluid may be water, preferably fresh water.

Where the fluid is water, the pump may include a chamber (108) above the braid sleeve and the container (11), water leaving the container (11) through the outlet passing to the chamber as the braid sleeve extends and the chamber providing water under pressure to expand the braid tube (12) and the fill the container (11).

In this case, the pump may include a generator (121) associated with the chamber (108), water filling the chamber (108) expelling air from the container (11), the air driving the generator (121).

Alternatively, water may pass from the container (11) to drive the generator (121) before passing to the chamber.

Alternatively, the fluid may be a gas.

In the pump according to any one of claims 1 to 4 and where the fluid is sea water, the outlet may be provided by a reverse osmosis membrane (360), extension of the container (11) forcing sea water through the membrane (360) to produce fresh water, the outlet being connected to a reservoir for collecting the fresh water.

In this case, the container may be surrounded by a sleeve (362) forming a chamber for receiving said fresh water, the sleeve (362) collapsing as the diameter increases to expel fresh water from an outlet to the sleeve (362) leading to said reservoir..

In the method of claim 15, the means for converting energy may be a float.

The following is a more detailed description of some embodiments of the invention, by way of example, reference being made to the accompanying drawings in which:-
Figure 1a is a schematic cross-section of a deformable vessel for use in a wave energy converter and shown in an undeformed disposition,
Figure 1b is a similar view to Figure 1 but showing the vessel in a deformed disposition,
Figure 2 is a view of a braid,
Figures 3a, 3b and 3c are cross-sectional and side elevational views of a vessel of the kind shown in Figures 1 and 2 and made of braid showing successive stages of elongation of the vessel and the change in dimensions caused by such elongation,
Figures 4a and 4b are schematic views of a pump incorporating a reservoir and operating as described above with reference to Figures 1 to 3 and showing the pump in an extended disposition (Figure 4a) and a retracted disposition (Figure 4b),
Figures 5a and 5b are schematic views of a pump incorporating a linear retractor and operating as described above with reference to Figures 1 to 3 and showing the pump in an extended disposition (Figure 5a) and a retracted disposition (Figure 5b),
Figures 6a and 6b are schematic views of a pump incorporating a concertina-type retractor and showing the pump in an extended disposition (Figure 6a) and a retracted disposition (Figure 6b),
Figures 7a and 7b are schematic views of a pump incorporating two pumps of the kind shown in Figure 3, the pumps operating in series,
Figures 8a and 8b are schematic views of a pump of the kind shown in Figures 4a and 4b with a chamber mounted on a float of the pump and having a water driven generator incorporated in the chamber, the Figures showing successive stages of operation,
Figures 9a and 9b are schematic views of a pump of the kind shown in Figures 4a and 4b with a chamber mounted on a float of the pump and having an air driven generator incorporated in the chamber, the Figures showing successive stages of operation,
Figures 10a, 10b and 10c are respective side elevations of a pump of the kind shown in Figures 1 to 3 incorporating a first form of reservoir and shown in successive stages of operation,
Figures 11a, 11b and 11c are respective side elevations of a pump of the kind shown in Figures 1 to 3 incorporating a second form of reservoir and shown in successive stages of operation,
Figures 12a, 12b and 12c are respective side elevations of a pump of the kind shown in Figures 1 to 3 incorporating a third form of reservoir and shown in successive stages of operation,
Figure 13 is a schematic view of a wave energy converter formed by first and second interconnected pumps formed by vessels of the kind shown in Figures 1 to 3 and deployed in the sea,
Figure 14 is a similar view to Figure 13 but showing a wave approaching the first pump and a preceding wave passing the second pump,
Figure 15 is a similar view to Figure 14 but showing a wave passing the first pump and approaching the second pump,
Figure 16 is a schematic view of a wave energy converter formed by a train of pumps of the kind shown in Figures 14 and 15 connected to common connecting pipes,
Figure 17 is a side elevation of the converter of Figure 16 in a calm sea,
Figure 18 is a side elevation of the converter of Figures 16 and 17 as a wave passes,
Figure 19a is a cross-section through a pump of the converter of Figures 16 to 18 elongated by a wave crest,
Figure 19b is a cross-section through a pump of the converter of Figures 13 to 15 decreasing in volume under the trough of a wave,
Figure 20 is a schematic plan view from above of a portion of the wave converter of Figures 16 to 18 showing the flow of water through outflow and return pipes of the converter,
Figures 21a and 21b are schematic cross sections through the outflow and return pipes of Figure 20 showing the flow of water and the connection of the pipes to the a pump,
Figure 22 is a schematic cross section of a pump of the converter of Figures 16 to 18,
Figures 23a and 23b are views respectively of an end cap and a connector of the converter of Figures 16 to 18,
Figure 24 is a perspective view of a buoyant float of the converter of Figures 16 to 18,
Figures 25a and 25b are perspective views of a unit of the converter of Figures 16 to 24 showing the pump in respective fully extended and partially extended positions,
Figure 26 is a schematic view of an array of wave converters of the kind shown in Figures 16 to 25a and 25b,
Figures 27a and 27b are schematic plan views of respective second and third arrays of wave converters of the kind shown in Figures 16 to 25a and 25b,

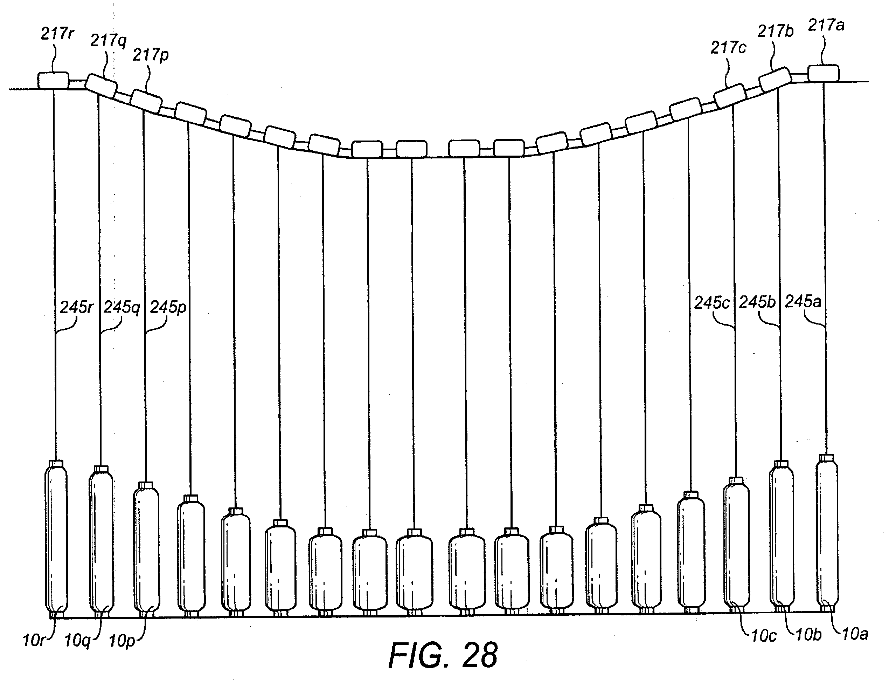

Figure 28 is a schematic view of an alternative form of wave energy converter including pumps that are connected directly to the sea floor,
Figure 29 is a similar view to Figure 17 but showing a power generator mounted on the converter
Figure 30a, 30b and 30c are a schematic end, side and perspective views respectively of a second form of energy absorber for use with the pumps of any one of Figures 1 to 29,
Figure 31a, 31b and 31c are a schematic end, side and perspective views respectively of a third form of energy absorber for use with the pumps of any one of Figures 1 to 26,
Figure 32a, 32b and 32c are a schematic end, side and perspective views respectively of a fourth form of energy absorber for use with the pumps of any one of Figures 1 to 29,
Figure 33a, 33b and 33c are a schematic end, side and perspective views respectively of a fifth form of energy absorber for use with the pumps of any one of Figures 1 to 29,
Figure 34a, 34b and 34c are a schematic end, side and perspective views respectively of a sixth form of energy absorber for use with the pumps of any one of Figures 1 to 26,
Figure 35 is a schematic view of a first form of anchor for use with energy absorbers that operate on heave,
Figure 36 is a schematic view of a second form of anchor for use with energy absorbers that operate on heave,
Figure 37 is a schematic view of a third form of anchor for use with energy absorbers that operate on heave,
Figure 38 is a schematic view of a fourth form of anchor for use with energy absorbers that operate on heave or pitch and heave,
Figure 39 is a schematic view of a fifth form of anchor for use with energy absorbers that operate on surge or heave and surge,
Figure 40 is a schematic view of a sixth form of anchor for use with energy absorbers that operate on surge or heave and surge.
Figures 41a and 42b are schematic sectioned elevations of a first form of energy store for use with the pumps of any one of Figures 1 to 29, the store being shown in a filled disposition (Figure 41a) and an emptied disposition (Figure 41b),
Figures 42a and 42b are schematic sectioned elevations of a second form of energy store for use with the pumps of any one of Figures 1 to 29, the store being shown in a filled disposition (Figure 42a) and an emptied disposition (Figure 42b),
Figures 43a and 43b are schematic sectioned elevations of a third form of energy store for use with the pumps of any one of Figures 1 to 29, the store being shown in a filled disposition (Figure 43a) and an emptied disposition (Figure 43b),
Figure 44 is a schematic view of an arrangement of pumps of any of the kinds shown above with reference to Figures 1 to 29 combined with an offshore wind turbine,
Figure 45 is a schematic view of an installation utilising tidal energy and incorporating a pump according to any one of Figures 1 to 29,
Figure 46 is a schematic view of a reverse osmosis installation incorporating a modified form of the pump shown in Figures 8a and 8b,,
Figures 47a and 47b are sectioned side elevations and cross sections of the pump of Figure 46 in respective extended and collapsed dispositions, and
Figure 49 is a partial cross-section of the pump of Figures 47a and 47b showing the reverse osmosis action.

The embodiments of the invention to be described with reference to the drawings utilize the change in shape of a vessel to produce a flow of pressurised fluid as an energy source. The principle on which this works is as follows.

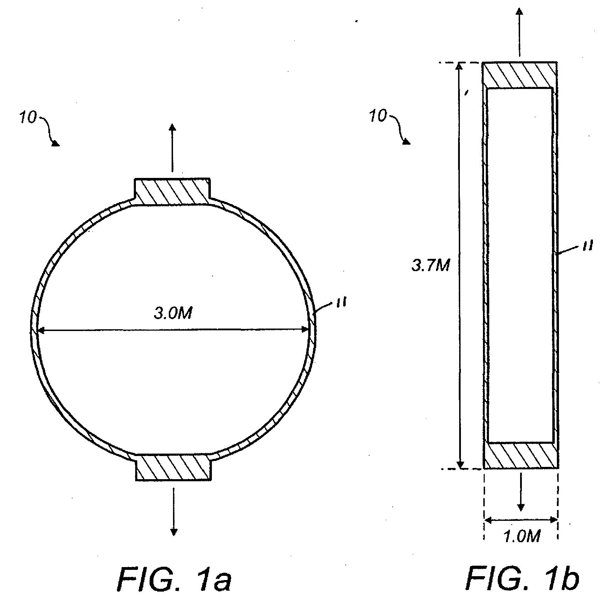

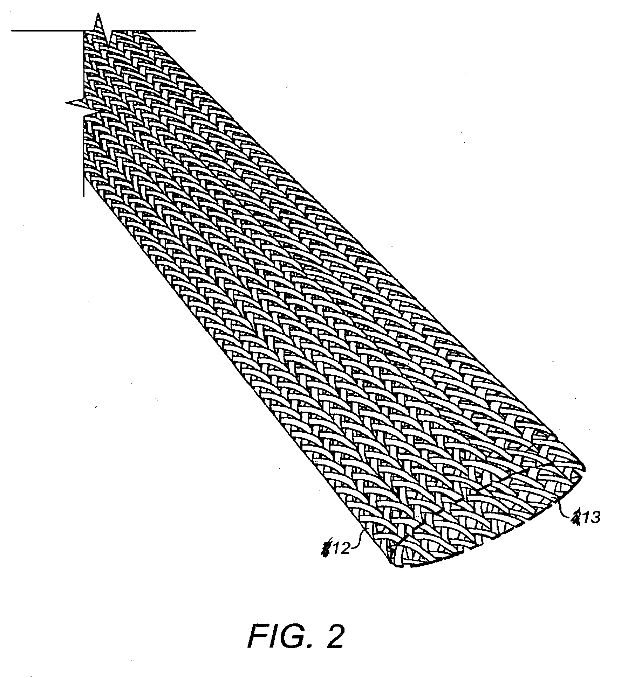

Referring first to Figure 1, the deformable vessel 10 in the form of a sphere has a greater volume than the same vessel 10 when it is deformed into a cylindrical shape. If the spherical vessel 10 is distorted by pulling two opposite sections of the vessel 10 (see Figure 2), such that the vessel 10 changes shape to a more cylindrical shape, then the volume will be decreased and the fluid pressure inside the vessel will therefore increase. For example, a deformable vessel 10 of a spherical shape with a diameter of 3 metres will have a volume of approximately 10 cubic metres. If the vessel 10 is deformed into a cylindrical shape of 1 metre diameter (see Figure 2) it will then have a length of approximately 3.7 metres and a volume of 2.9 cubic metres. (i.e. there is a volume change by a factor of approximately 3).

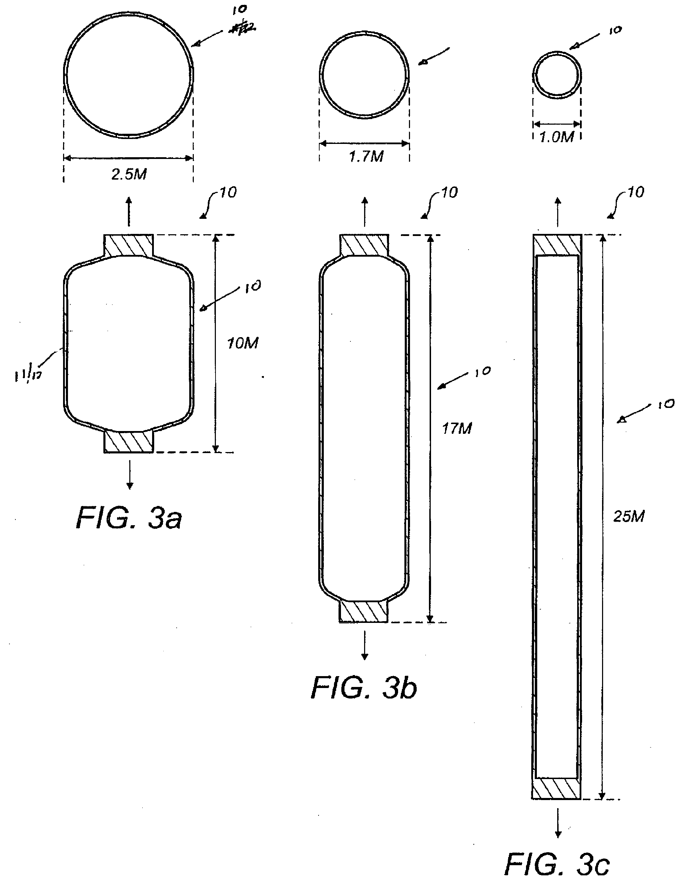

In the embodiments of the invention to be described with reference to the drawings the deformable vessel 10 is constructed from a bladder 11 and a surrounding braid 12. Referring to Figure 2, a braid 12 as referred to in this specification is a tube formed by intertwining three or more strands 13 of a flexible material such that the braid 12 can be expanded radially, by for example, being pressurised internally, and, when the braid is extended in length, for example by applying force to each end of the braid, then its diameter is reduced and therefore the volume enclosed by the braid is also reduced in comparison with the volume when the braid is expanded. The braid tube may, in its unstressed state as manufactured, be a tube of constant cross-section along its length or it may be a tube whose cross-section varies along its length. For example, it may have a smaller diameter at its ends and a larger diameter intermediate its ends. The difference in diameters in this case could be significant so that the centre portion of the braid is almost egg shaped. References to "braid tube" in this specification are to be construed accordingly. Typically braids change their volume and shape by a factor of 2.5 between the maximum expanded disposition and the minimum lengthened disposition. Figures 3a, 3b and 3c show how this takes place.

The bladder 11 can be formed integrally with the braid 12 by, for example by coating the braid 12 with a flexible polymeric material such as silicone or a flexible plastic such as polyurethane. Alternatively the braid 12 can retain within it a sealed bladder made from a flexible material such as silicone or polyurethane or a synthetic rubber. It is preferred to use a polyurethane or silicone or synthetic rubber bladder 12 within the braid that is made "over size" having a length that is at least as long as the maximum length of the braid 12 and a diameter that is at least as large as the maximum diameter of the braid 12 when expanded. In this way, the bladder 11 is unstressed as it fills and empties. For the purposes of the description that follows, a vessel 10 formed in this way with a radially expandable and contactable braid sleeve 12 and a bladder 11, whether formed together or separately will be referred to as a "braid pump".

When the braid 12 and the bladder 11 are separate, there will be relative movement between the braid and the bladder as the braid expands and shortens and then contracts and lengthens. In order to reduce wear on the bladder from such relative movement, the braid may be formed or coated with a low friction material. Alternatively, a low friction material could be placed between the braid 12 and the bladder 11. The bladder 11 could be formed with a double skin with a lubricant between the two skins.

The bladder 11 may be elastic but this is not essential.

An example of a braid pump 10 is formed from a VECTRAN (trade mark) 1500 braid with a tensile strength greater than 7000 tonnes, a burst strengthof the order of 10 bar. The braid pump of the example has a fully extended length of 35m with an outside diameter of 0.9m and a fully contracted length of 20m and a diameter of 2m. The maximum length change is thus ± 15m and the maximum volume change ± 78m³. The reduction of volume can produce a flow of 5.2m³/sec at a speed of 4.6m/sec. The force applied to the braid pump is 200 tonnes and the maximum pressure change is ± 2.4 bar. This gives a potential power of 650kw (allowing 50% system loss and 200kw when operating at 30% of peak.

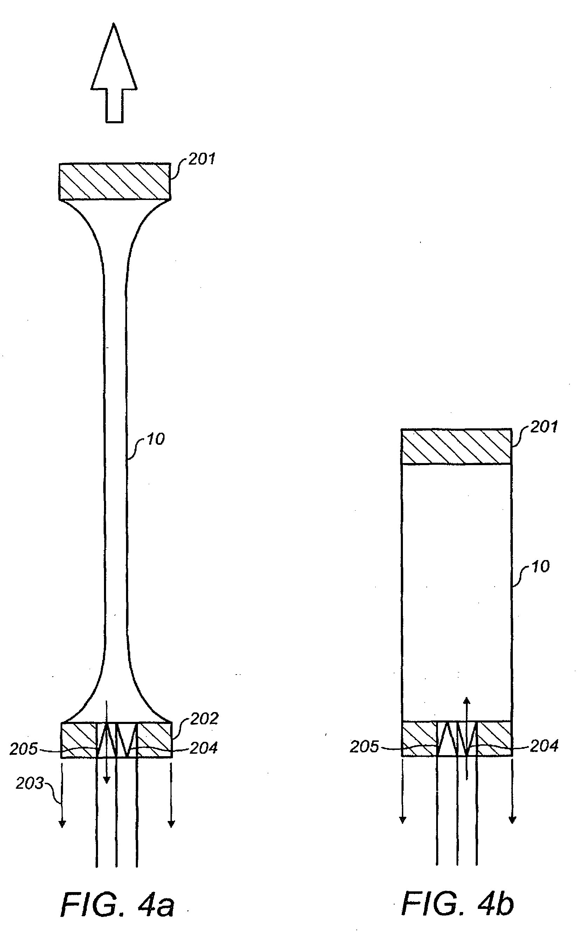

Referring next to Figures 4a and 4b, a pump incorporating a braid pump of any of the kinds described above with reference to Figures 1 to 3 has the braid pump 10 arranged between an energy absorber 101 and a valve assembly 102 with the valve assembly being anchored to the sea bed by an anchor 103. The energy absorber 101 is in the form of a float that provides sufficient buoyancy so that as a wave passes the absorber 101, the absorber 101 rises to elongate the braid pump 10 as described above. The valve assembly 102 includes an inlet valve 104 and an outlet valve 105.

The braid pump 10 is filled with fresh water that has been treated with, for example, algae inhibitors. As the braid pump 10 is elongated, its volume decreases, as described above, and the water is forced out of the braid pump 10 through the outlet valve 105 from which it passes to, for example, a turbine or generator (not shown).

As the crest of the wave passes, the energy absorber 101 drops allowing the braid pump 10 to contract so increasing the volume. This allows water to enter the inlet valve 104 and fill the braid pump 10 so expanding the braid as described above. The water that enters the braid pump 10 through the inlet valve 105 may be supplied from a low pressure reservoir shown in broken line 106 or may be provided under low pressure from associated braid pumps (where a number are located together). Some examples of these arrangements are described below.

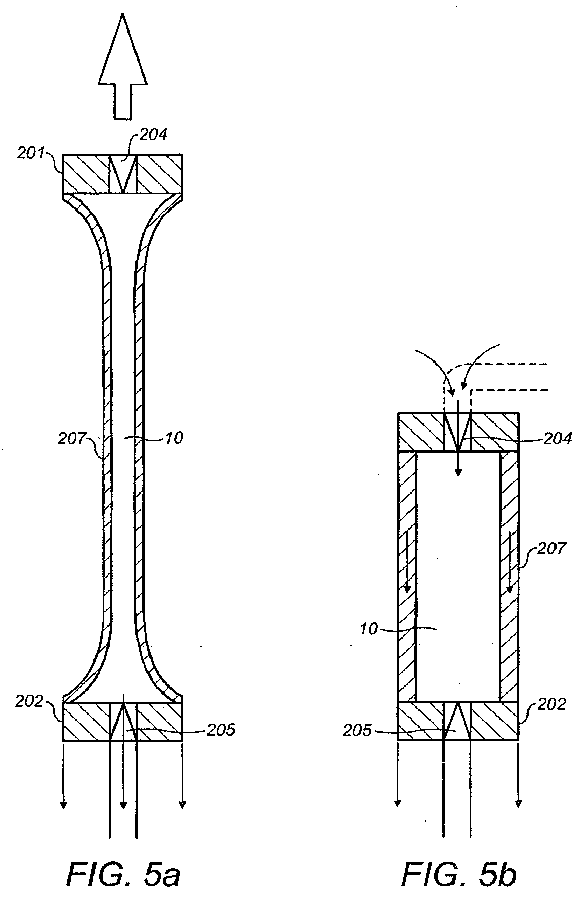

Referring next to Figures 5a and 5b parts common to these Figures and to Figures 4a and 4b will be given the same reference numerals and will not be described in detail. In this embodiment, no low pressure supply of water is required to re-fill the braid pump 10. Instead, the braid pump 10 is associated with a retractor 107 that acts to apply a collapsing force to the braid pump 10 that increases the volume of the braid pump 10 after a wave crest has passed.

The retractor 107 may be formed in a number of ways. For example, the bladder may be formed of an elastomeric material that is elongated as the energy absorber 101 rises and that contracts once a wave has passed to draw sea water into the bladder. Alternatively, separate springs may be provided. These may be metal springs or gas filled retractors or any other means for applying a force to the braid pump 10 that collapses the pump to draw water into the bladder.

As seen in Figures 5a and 5b, in this embodiment, the inlet valve 104 may be at the upper end of the braid pump. As also shown in those Figures, a low pressure reservoir 106 may feed water into the braid pump to expand the braid as the absorber descends.

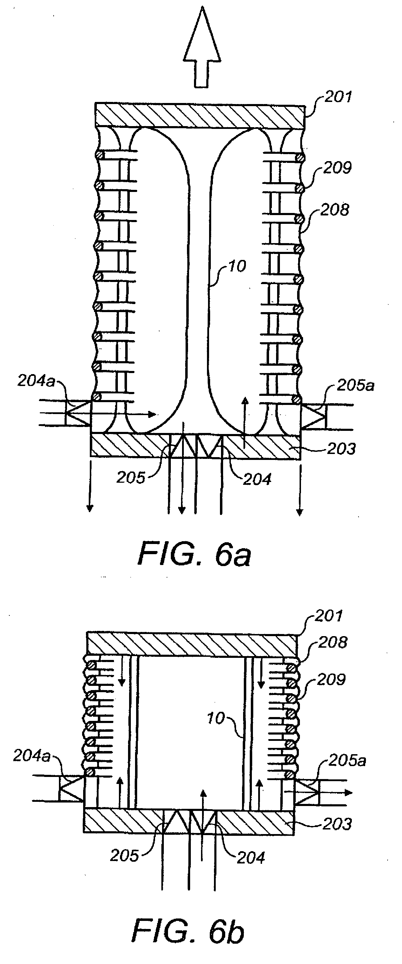

Referring to Figures 6a and 6b, an alternative form of pump uses a sleeve 108 surrounded by and connected to a coil spring 109 co-axial with the sleeve 108. The sleeve 108 is arranged between the energy absorber 101 and the anchor 103 with the inlet and outlet valves 104a, 105a at diametrically opposite points at the lower end of the sleeve 108. A braid pump 10 of the kind described above with reference to the drawings is provided between the energy absorber 101 and the anchor 102. The braid pump 10 has inlet and outlet valves 104, 105

In use, the passage of a wave extends the length of the sleeve 108 against a restoring force from the spring 109 to increase the volume of the sleeve 108 and draw in water through the inlet valve 104. As the wave passes, the spring 109 collapses the sleeve 108 (see Figure 6b) to expel water through the outlet valve 105 for use as an energy source.

The braid pump 10 provides a flow of pressurised water as a wave rises as described above. In this embodiment, therefore, there is a supply of pressurised sea water both as the wave rises (through the outlet valve 105) and as the wave falls (through the outlet valve 105a).

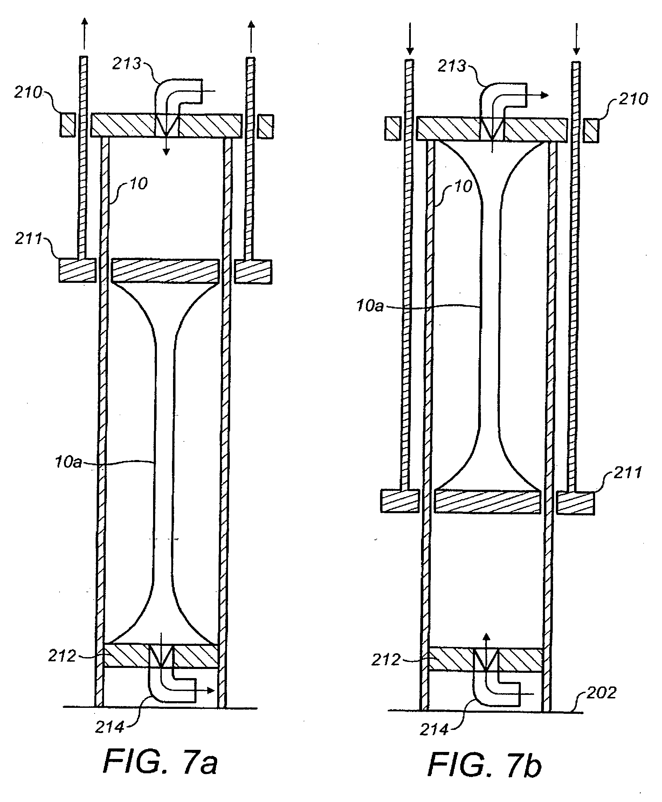

Referring next to Figures 7a and 7b, two braid pumps 10, 10a may be connected in series to provide pressurised sea water both as a wave rises and as the wave falls. In this embodiment, a first braid pump 10 is connected between an upper mounting 110 that is connected to the anchor 102 and an intermediate mounting 111 that is connected to the energy absorber 101. The second braid pump 10a is connected between the intermediate mounting 111 and a lower mounting 112 fixed to the anchor 102. The first braid pump 10 has a combined inlet/outlet 113 extending through the upper mounting 110 and the second braid pump 10a has a combined inlet/outlet 114 extending through the lower mounting 112.

As a wave rises, the energy absorber 101 raises the intermediate mounting 111. This extends the second braid pump 10a to expel pressurised water through the associated inlet/outlet valve 114. At the same time, the first braid pump 10 collapses and increases volume to allow water to enter the first braid pump 10 through the associated inlet/outlet valve 113 from a low pressure source or from other pumps, as described above.

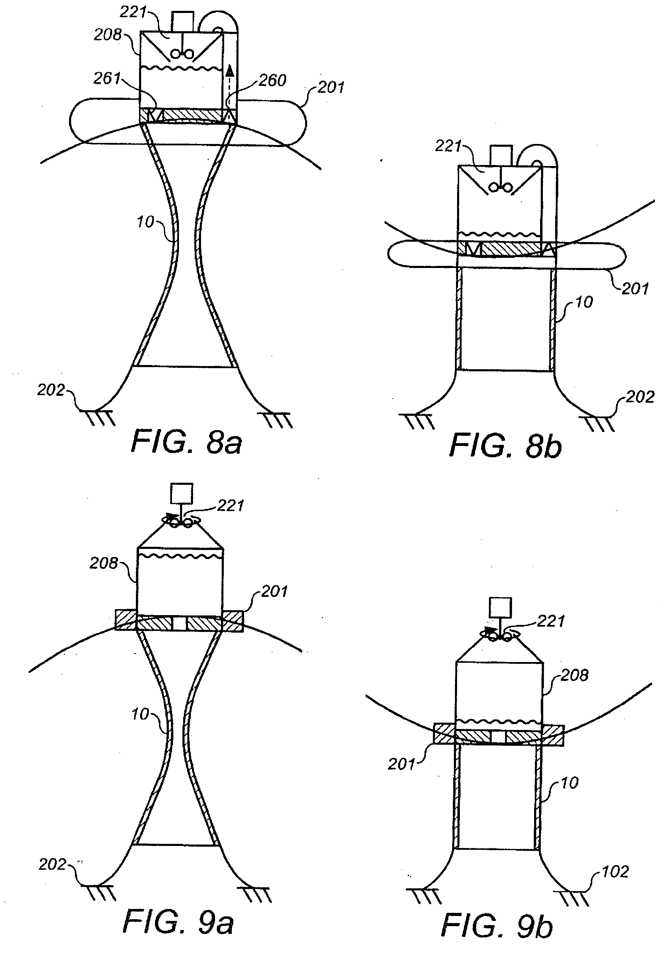

In any of the embodiments described above with reference to Figures 4a, 4b; 5a, 5b or 6a, 6b a generator (not shown) may be mounted on the float 101. Two arrangements of this kind will now be described with reference to Figures 8a and 8b and 9a and 9b.

Referring first to Figures 8a and 8b, a braid pump 10 is connected between an anchor 102 and a float 101 as described above with reference to Figures 4a and 4b, for example. The float 101 carries a chamber 108 with a valve controlled inlet 160 and a valve controlled outlet 161 connecting the chamber 108 to the pump 10. The inlet 160 leads to an inlet 162 to a generator 121 mounted at the upper end of the chamber 108 to provide, as a wave rises past the pump 10, pressurised water to the generator 121 to drive the generator 121. Water leaving the generator enters the chamber 108 from which it passes back into the pump 10 as the wave falls (see Figure 8b).

The generator 121 need not be driven by water from the pump10. It could be driven by air and an example of this is shown in Figures 9a and 9b. Parts common to these figures and to Figures 8a and 8b are given the same reference numerals and will not be described in detail.

In this embodiment, the inlet 160 from the pump 10 to the chamber 108 leads direct into the chamber to fill the chamber 108 as a wave rises past the pump 10. This expels air from the chamber 108 to drive a generator 121 mounted above the chamber 108 (see Figure 9a). As the wave crest passes, the water leaves the chamber 108 and is drawn back into the pump 10 through the outlet 161 from the chamber 160 to the pump.

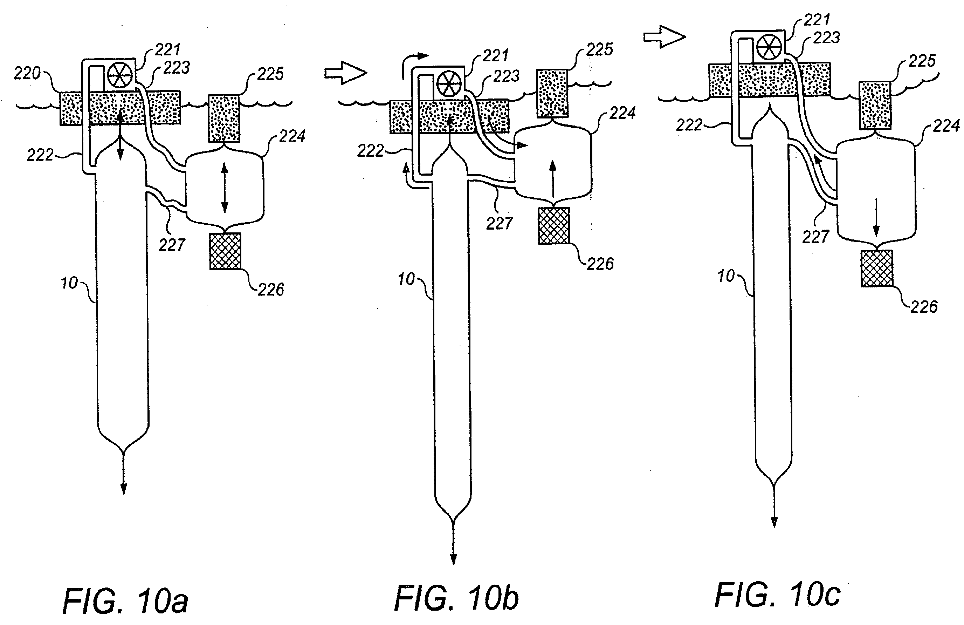

As mentioned above, when a braid pump 10 is used alone, it can necessary to provide a supply of pressurised treated fresh water to fill the pump 10 as its volume increases (on the down side of a wave). Three examples of such a supply will now be described with reference to Figures 10a, 10b, 10c; 11a, 11b, 11c and 12a, 12b 12c.

Referring first to Figures 10a, 10b and 10c, a first arrangement has a braid pump 10 of any of the kinds described above connected between an anchor (not shown) and an energy absorber in the form of a first float 120. In this embodiment, the float carries a generator 121. An outlet 122 from the braid pump 10 is connected to the generator 121 and an outlet 123 from the generator is connected to a reservoir 124. The reservoir 125 is formed from a braid/bladder combination in the same way as the pump 10. The reservoir 124 is supported by a second float 125 and positioned by a suspended deadweight 126. An outlet 127 from the reservoir 124 leads to the pump 10.

In use, the pump 10 is extended and contracted as waves pass, as described above with reference to the drawings. In the static position shown in Figure 10a, the pressure in the pump 10 and the reservoir is equal at, for example, 2 Bar. From the static position shown in Figure 10a, the passage of a wave crest causes the pump 10 to elongate (see Figure 10b). Treated fresh water in the pump is pressurised to, say, 6 Bar and is expelled through the outlet 122 to the generator 121 where the generator 121 is driven to produce electricity. The water exiting the generator 121 through the outlet 123 is at a pressure lower than the inlet pressure and passes to the reservoir 124 where the reservoir is filled and pressurised above 2 Bar. As the wave crest passes the float 120, the float 120 no longer exerts any force on the pump 10 and the pump 10 increases in volume. At the same time, water from the reservoir 124 passes through the outlet 127 to the pump 10 to fill the pump with water. The cycle is repeated with subsequent waves.

In this way, the pump 10 is cyclically filled and emptied as electricity is generated. The generator may include a flywheel to maintain the operation of the generator 121 between waves. In addition, the pressure of the water passing through the generator 121 may be controlled so that the pressure of the water exiting the reservoir 124 can pass through the generator before passing to the pump 10, so driving the generator 121 as the wave height decreases.

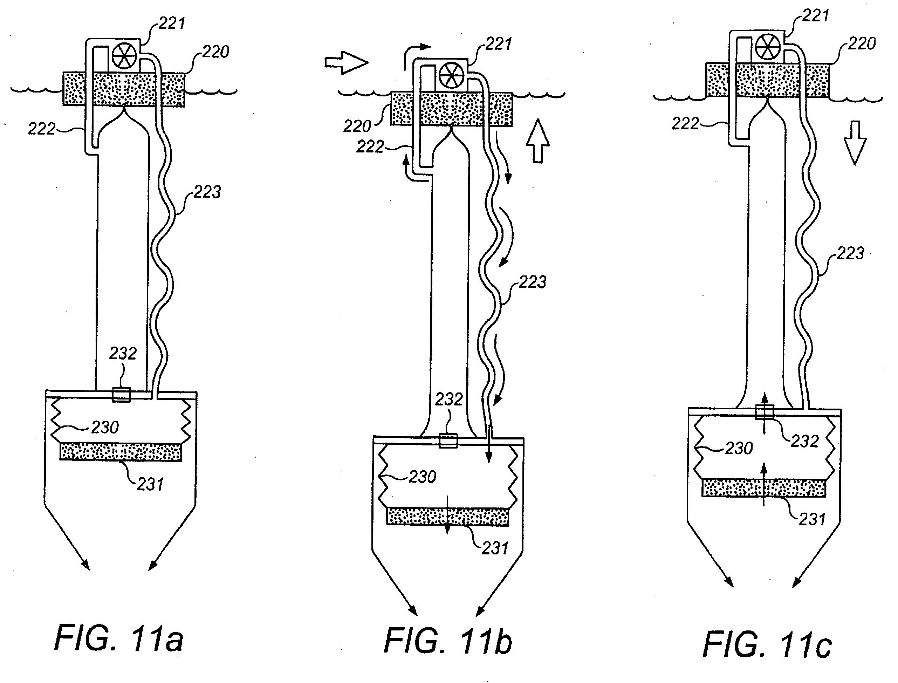

Referring next to Figures 11a, 11b and 11c, a second arrangement has parts in common with Figures 10a, 10b and 10c and these parts will be given the same reference numerals and will not be described in detail.

In this embodiment, the braid reservoir 124 is replaced with a reservoir 130 arranged beneath the pump 10. The reservoir 130 is formed by a collapsible tube supported by a third float 131 connected to the pump 10 by a one-way-valve 132 that allows flow only from the reservoir 130 to the pump 10.

From the static position shown in Figure 11a, the passage of a wave crest causes the pump 10 to elongate, as described above, and pass pressurised water to the generator 121 to generate electricity. See Figure 11b. The lower pressure water from the generator outlet 123 passes to the reservoir 130 where is fills the reservoir 130 against the action of the float 131 to provide a store of pressurised water. After the wave crest has passed, the pump 10 is compressed between the first float 120 and the third float 131 and water from the reservoir 130 passes through the valve 132 to refill the pump 10. The cycle continues with subsequent waves.

The generator 121 may be provided with a flywheel as described above and the pressure of the water in the reservoir 124 may be such as to drive the generator 124 before passing to the pump 10, as also described above.

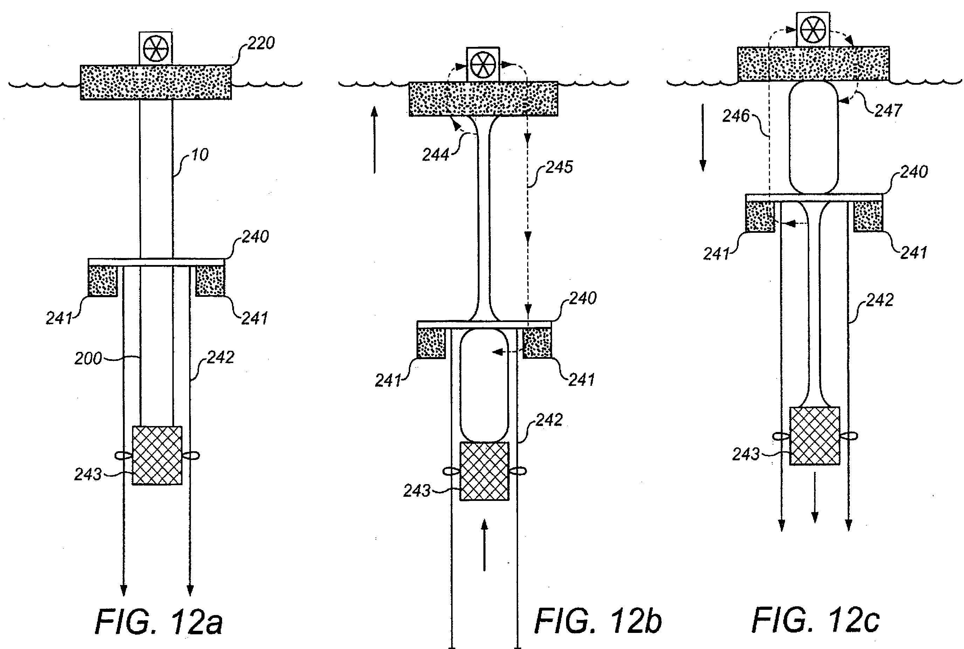

A system of this kind can be used to generate electricity both as a wave raise and as a wave falls in a similar way to the arrangement described above with reference to Figures 9a and 9b. Referring next to Figures 12a, 12b and 12c, in the arrangement of these Figures, parts common to these Figures and to Figures 10a, 10b and 10c are given the same reference numerals and will not be described in detail.

In this arrangement, an upper braid pump 10 is arranged between a float 120 and an intermediate mounting 140. The intermediate mounting 140 carries floats 141 and is attached by cables 142 to the sea bed. In this way, the mounting 140 is kept at a fixed height from the sea bed. Of course, the mounting 140 could be a rigid structure projecting upwardly from the sea bed. A lower braid pump 10a depends from the mounting 140 and carries a deadweight 143 at its lower end. There is a fluid connection 144 between the first braid pump 10 and an inlet to a generator 121 mounted on the float 120, a fluid connection 145 between an outlet from the generator 121 and the second braid pump 10b, a fluid connection 146 between the second braid pump 10a and the inlet to the generator 121 and a fluid connection 147 from the outlet to the generator 121 to the first pump 10. All the connections are valve controlled.

In use, the first braid pump 10 elongates from the static position shown in Figure 12a as a wave rises to the position shown in Figure 12b and pressurised water passes from the first braid pump 10 through the connection 144 to the generator 121 for the generation of electricity. The water from the generator outlet passes through the connection 145 to the second braid pump 10a to pressurise the second braid pump 10a so expanding it radially to increase its volume and raising the deadweight 143. As the wave falls, the connection from the second pump 10a is opened and, under the weight of the deadweight 143, the second braid pump 10a elongates to decrease in volume and provide a flow of pressurised water to the generator 121. The water exiting the generator 121 passes through the connection 147 to the first braid pump 10 to expand the pump 10 radially to increase its volume and store the water. The cycle is repeated at subsequent waves. In this way, electricity is generated as the wave rises and as the wave falls to provide a continuous output from the generator 121, particularly if the generator 121 has a flywheel.

The braid pumps described above with reference to the drawings may also be arranged in parallel. Some examples will now be described.

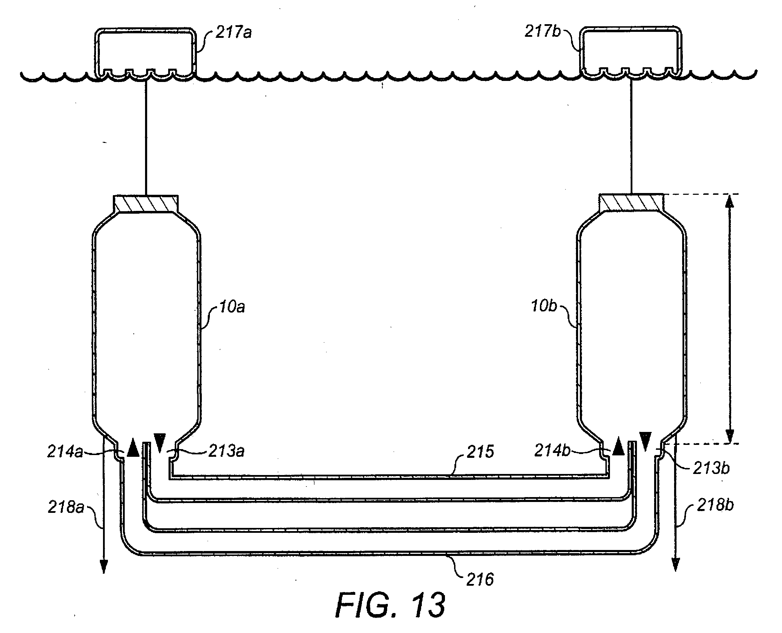

Referring next to Figure 13, a wave energy converter is formed by first and second braid pumps 10a, 10b. Each braid pump 10a, 10b has a respective valved outlet orifice 213a, 213b and a respective valved inlet orifice 214a, 214b. The outlet orifice 213a of the first pump 10a is connected by a pipe 215 to the inlet orifice 214b of the second pump 10b and the outlet orifice 213b of the second pump 10b is connected by a pipe 216 to the inlet orifice 214a of the first pump 10a. Each braid pump 10a, 10b is supported by an energy absorber in the form of a respective buoyant float 217a, 217b and attached by respective connecting lines 218a, 218b to a substantial weight or an anchor (not shown) on the sea bed or by a combination of the two. The braid pumps 10a, 10b and the connecting pipes 215, 216 are filled with a fluid either a gas or liquid. Preferably, they are filled with a liquid such as a treated fresh water. The system is adjusted such that the length of each braid pump 10a, 10b in a calm sea condition without any waves is half of its extended length from minimum length to maximum length - see Figure 13b.

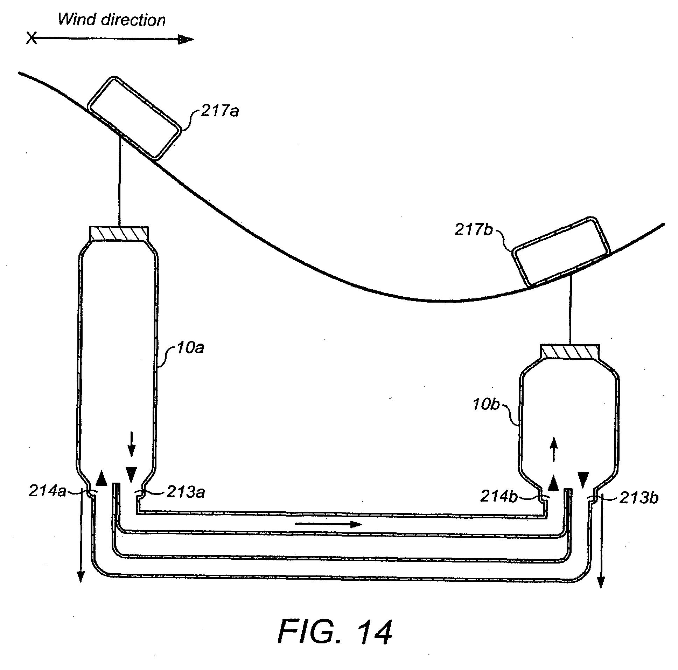

Referring next to Figures 13 and 14, in a sea of moving waves, the volumes of the pumps 10a, 10b are changed as the wave travels over the pumps 10a, 10b. As seen in Figure 14 the wave front lifts the float 217a of the first braid pump 10a. As is does so, and since the opposite end of the pump 10a is fixed to the sea bed, the pump will lengthen so reducing the diameter of the braid and the volume of the first pump 10a, as described above, so compressing the liquid within the pump 10a and forcing it out through the outlet valve 213a. At the same time the pressure inside the first pump 10a will increase at the valved outlet orifice 213a. This is caused by the height of liquid increasing above the valved orifice 213a (the "head of liquid") and further forces liquid out of the first pump 10a. This will cause water to flow through the pipe 215 from the first pump 10a to the second pump 10b.

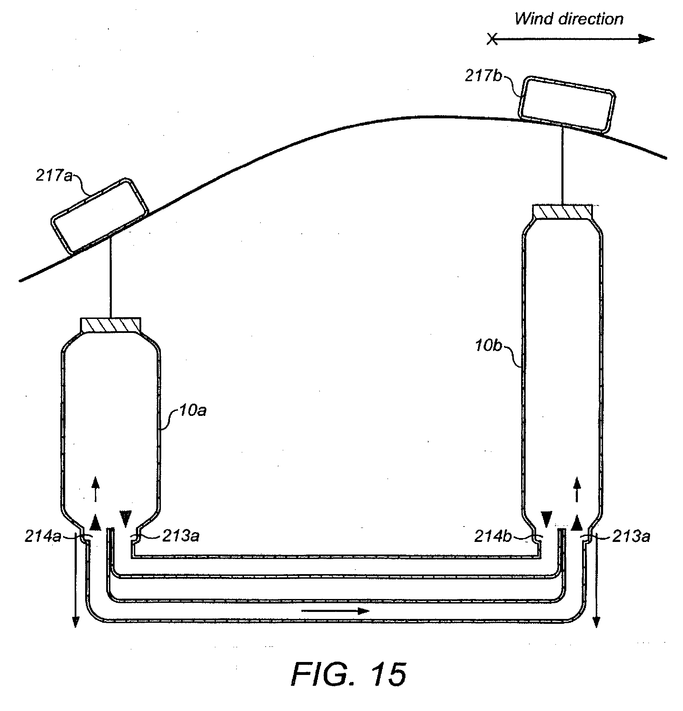

Referring next to Figure 15, as the wave passes the first pump 10a and approaches the second pump 10b the opposite effect occurs and water flows from the second pump 10b to the first pump 10a through the pipe 216. This is repeated with successive waves.

This principles described above with reference to Figures 13 to 15 can be applied to a larger series of such braid pumps (a train of pumps) to provide a continuous flow of fluid to do useful work.

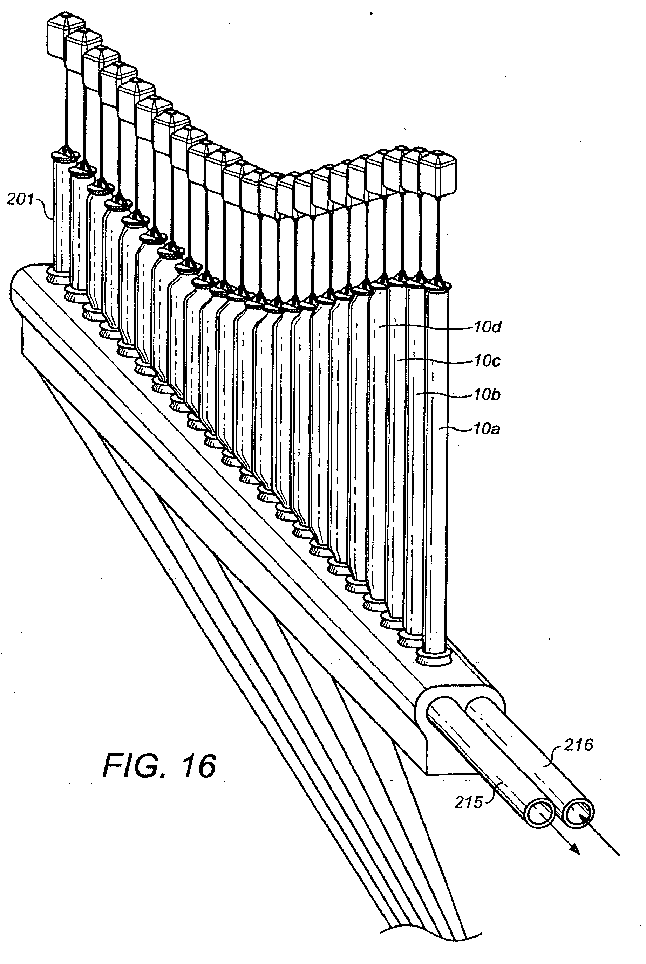

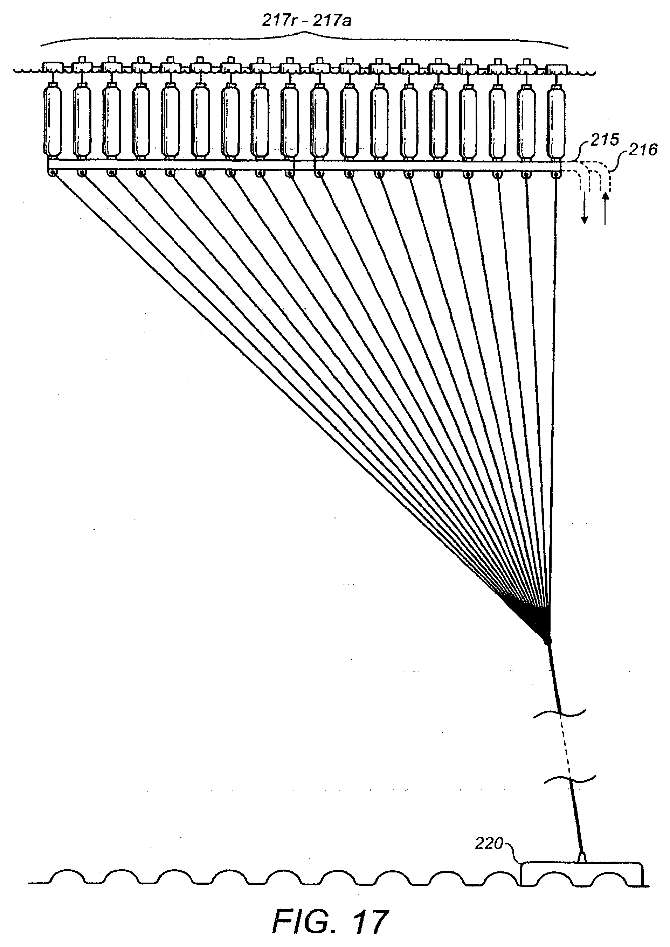

The wave energy converter of Figures 16 and 17 consists of a train of eighteen braid pumps 10a - 10r with an overall length of some 100 metres. The pumps 10a - 10r are connected to a substantial beam 220 that would normally be of a massive weight. The beam 220 also supports an outflow pipe 221 and a return flow pipe 222, which are connected to the braid pumps 10a - 10r in a manner described below. The braid pumps 10a - 10r are connected to the anchoring beam 220 such that the train of pumps 10a - 10r will always align itself at right angles to the wave direction. The braid pumps 10a - 10r and pipes 221, 222 are filled with a liquid - for example fresh water treated with a biocide to reduce bacterial and algal growth. The outflow and return pipes 221, 222 are connected to a power take off system. This takes the power generated in the form of a continuous flow of pressurised liquid to a power converter (not shown) of any suitable kind that then converts this into electrical power or other usable power form. In this case of electrical energy, the converter may be a turbine or other hydro-electrical generating system. A number of braid pump trains (an array) of the kind described above with reference to Figures 16 and 17 can capture and convert the energy and supply it by the means of pipes to a hydro-electric turbine generator. See examples of this are described below.

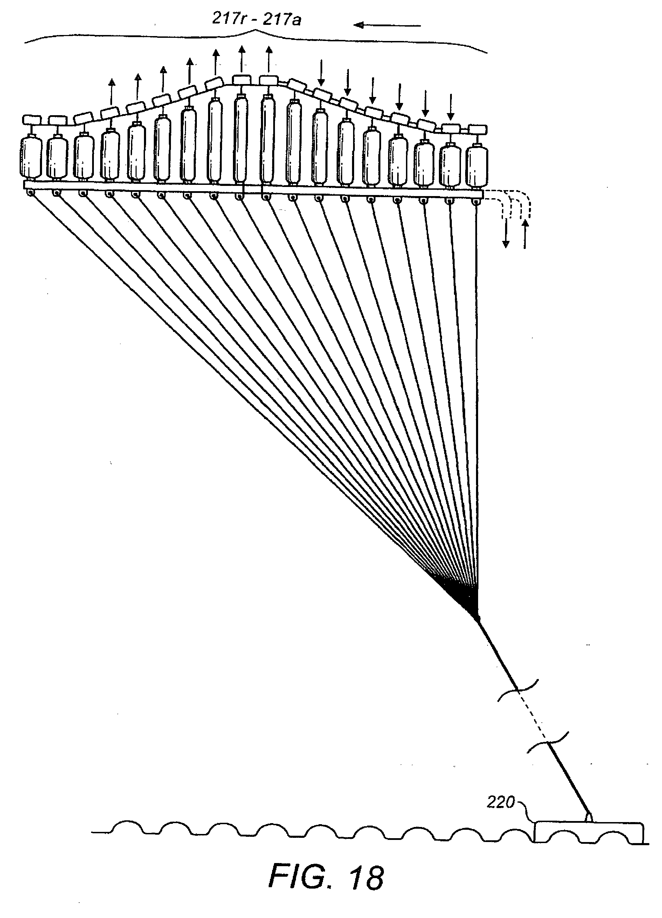

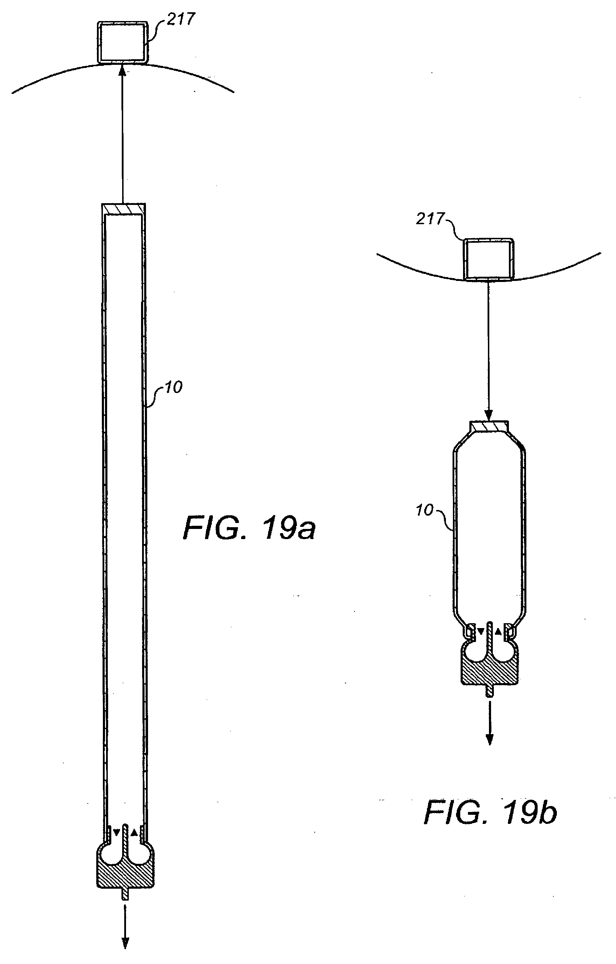

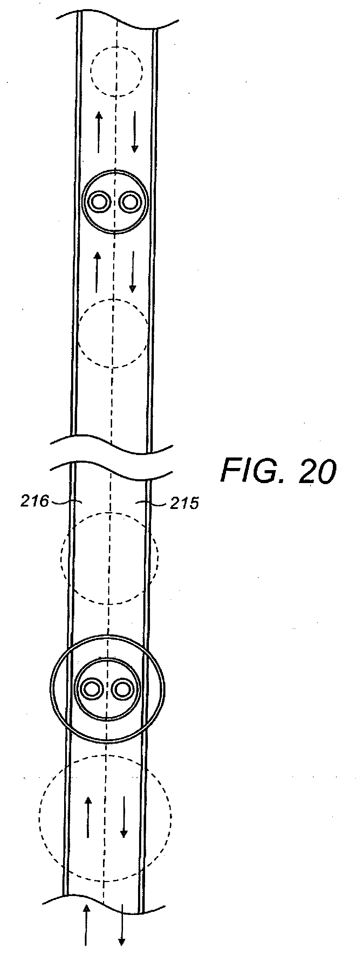

Referring to Figure 18, a wave lifts the buoyant floats 217i - 217o ahead of its peak and lowers the floats 217b - 217h in the trough. Therefore braid pumps 10i - 10o have an upward force being applied to them to force the fluid out of the braid pumps 10i - 10o (see Figure 19a) and into the outflow pipe 221 (see Figure 20). This liquid flow then goes to the power generation converter e.g. a turbine etc., and then returns via the return pipe 222 (see Figure 20) where it will fill the braid pumps 10b - 10h (see Figure 19b) that are in the trough of the wave. Thus a sustained continuous flow of pressurised liquid is generated and is passed through a power converter, taking the wave energy and converting it into usable power.

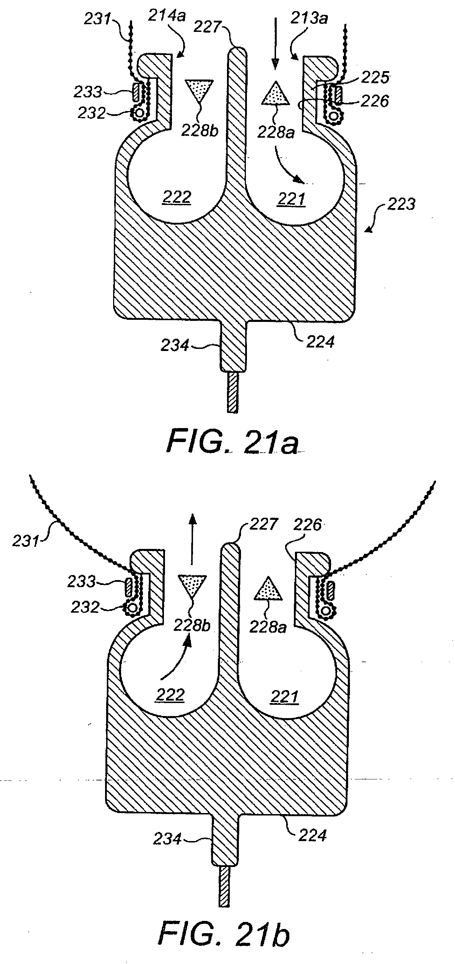

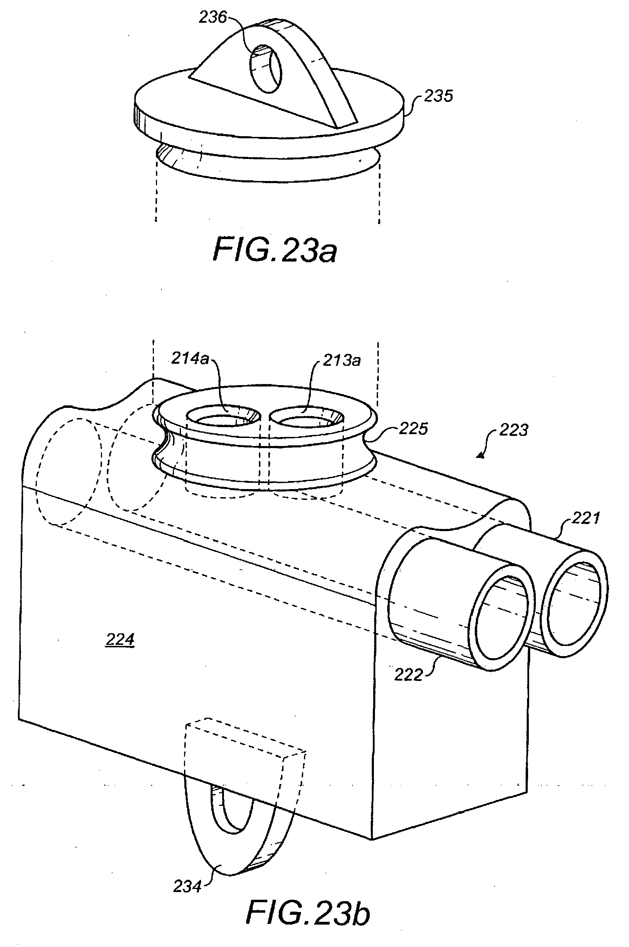

Referring next to Figures 21a and 21b, the outflow pipe 221 and the return pipe 222 pass through a succession of plastics moulded manifolds 223, one for each pump 10. As seen in Figures 21a and 121b, in cross-section, the manifold 223 forms a body 224 holding the outflow pipe 221 and the return pipe 222. The manifold forms a connector 225 for connecting the pipes 221, 222 to the pump 10 via the outlet and inlet orifices 213, 214. Each connector 225 comprises an annular flange 226 divided by a central wall 227 to form a circular outlet 213 leading to the outflow pipe 221 and a circular inlet 214 leading from the return pipe 222 (see also Figure 23b). The outlet 213 and the inlet 214 are provided with respective non-return valves 228a, 228b. The open end 230 of the braid 231 of the pump 10 is passed around a ring 232 and then clamped to the outer surface of the flange 226 by a clamping ring 233. The lower end of the body 224 is formed with a connection point 234 to which the connector 218 is attached.

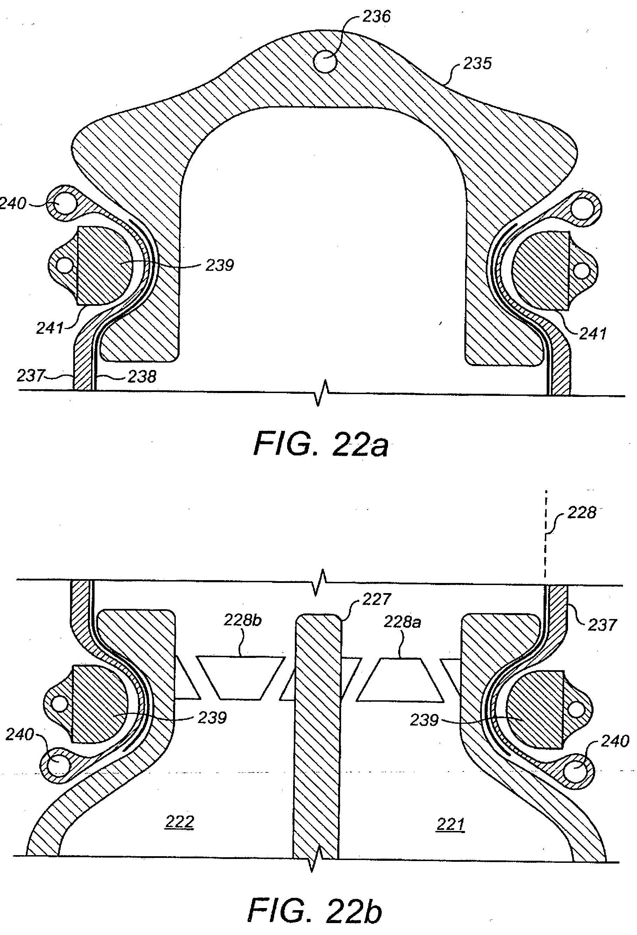

The upper end of each braid pump 10a - 10r includes an end cap 235 (see Figure 22) that is attached to the associated buoyant float 217a - 217r. The end cap 235 includes a strong attachment point 236 for a connector to the buoyant float 217. The braid sleeve 237 and the internal bladder 238 are attached to the end cap 235 by means of a clamp ring 239. The internal bladder 238 is made such that it is "over sized" (i.e. its dimensions are greater than the maximum diameter and the maximum length of the braid sleeve 237 so that no force or tension is applied to it). Consequently the braid sleeve 237 carries all the force. The braid sleeve 237 is wrapped around a securing ring 240 and then tightly restrained against the end cap 235 by the clamp ring 239. Such a clamp ring 239 could, for example, be made of curved sections of a strong material such as stainless steel or alternatively be a flexible band that incorporates a means of tightening the material onto the end cap 235.

The clamp ring 239 also secures the internal bladder 238 and seals it around the end cap 235. A cover material 241 can be affixed to the outside of the braid sleeve 237 by attaching it to the clamp ring 239 as well in order to protect the braid sleeve 237 and this may also be a material that will inhibit marine growth - for example algae or barnacles.

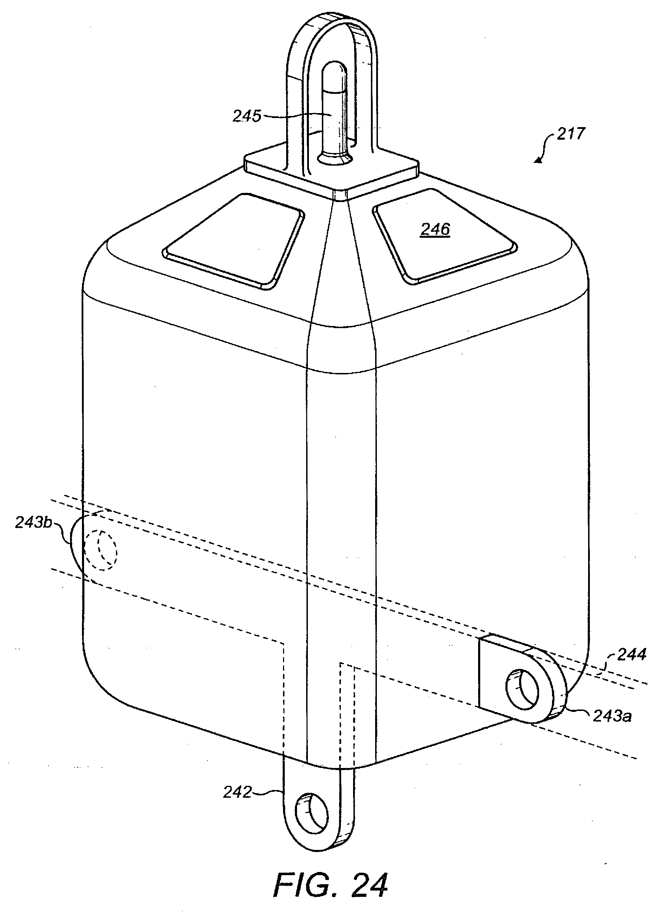

Referring next to Figure 24, each buoyant float 217 has sufficient displacement in order to ensure that the force it applies to the braid sleeve 237 can overcome the "back pressure" of the fluid within the system as it generates power through the power conversion device (the power generating turbine etc.). Each buoyant float 217 has a strong attachment point 242 to which is attached a strong cable (not shown) that connects it to the end cap 235. The float 217 also has opposed lateral strong attachment points 243a, 243b such that the float 217 can be linked through a hinge attachment bars 244 to the floats 217 on each side of it, in order to keep the floats separated at a defined distance (being the distance between the two centre lines of two braid pumps 10) so that they do not abrade or damage each other in a rough sea. A number of the floats 217 can be fitted with position warning indicators such as lights or strobe lights or a radar transponder 245 in order to alert ships to the presence of the power generating field. Such lights or other location/warning devices can be powered by solar panels 246 situated on the topside of the float 217.

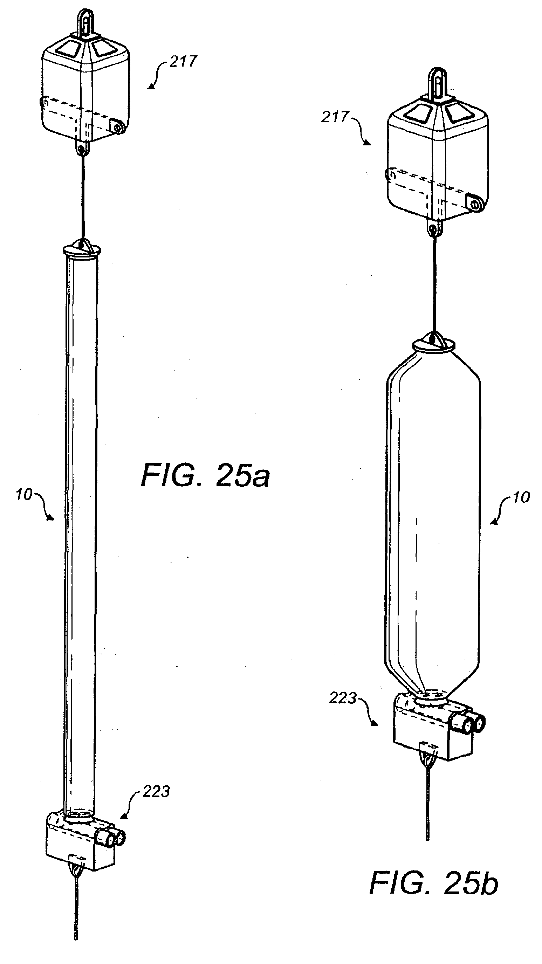

Figures 25a and 25b show respective three-dimensional views of the braid pump assembly. Figure 25a shows the pump 10 with the buoyant float 217 at the wave crest and Figure 25b shows the pump 10 with the buoyant float 217 in the wave trough.

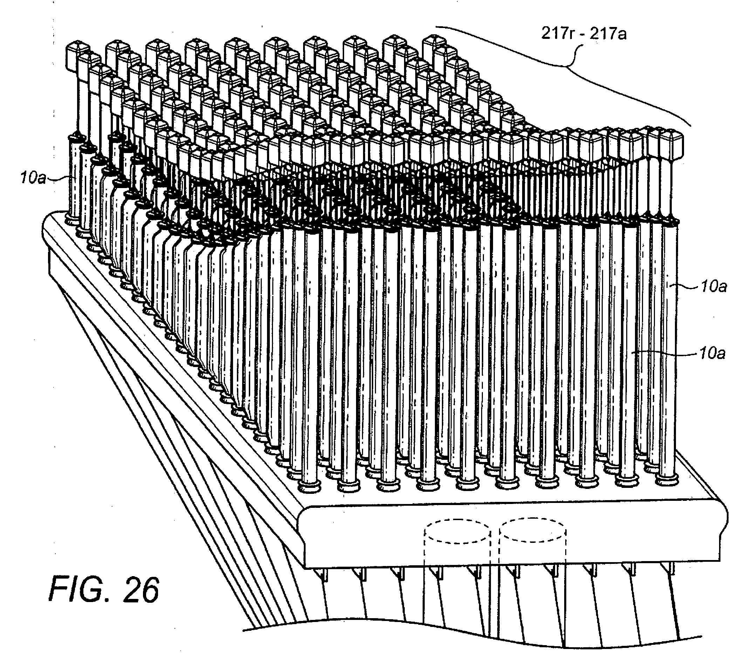

Referring next to Figure 26, a number of trains of pumps 10a - 10r of the kind described above with reference to Figures 13 to 22a and 22b can be located in a rectangular plan. In this case the braid pumps present a number of pumps 10a (in this case 10) to the approaching wave front. Wave energy is assessed as power (Watts) per metre of wave front (e.g. in a 3 metre high wave equals 40 Kw and with a 15 metre wave height, 1.4 Mw/metre). Therefore in this case the device will convert substantially more energy per wave front.

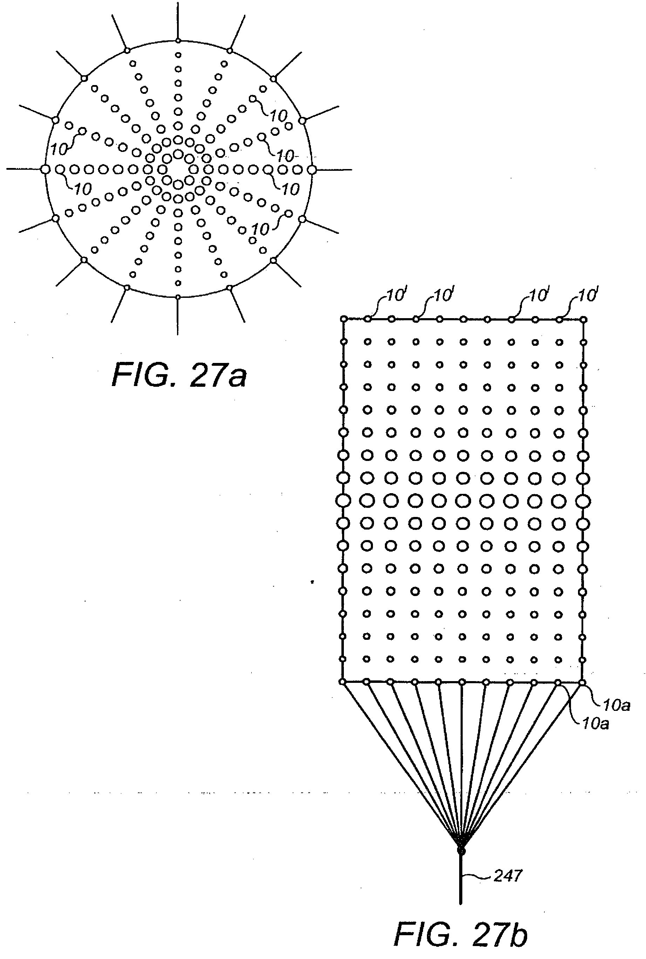

Figures 27a and 27b show respective plan views of two alternative arrangements of braid pumps In figure 27a, the arrays of pumps 10a - 10r are arranged along equiangularly spaced radii moored in a fixed position such that the energy converter does not swing free in the moving waves and presents the same profile to the wave coming from any direction. Figure 27b is a plan view of the device depicted in Figure 26 but the pumps 10 are attached to the ocean floor by an anchoring system, 247 such that the energy converter can swing on its anchoring system 217 so that the wave converter aligns itself at an angle of 90° to the wave front.

The embodiments of the invention described above with reference to the drawings show the pumps 10a - 10r attached to the ocean floor by anchoring systems. It will be appreciated that it may be desirable to maintain the pumps 10a - 10r at a required height above the sea bed and also a required depth below a calm sea surface. As a result of changes in these distances - resulting, for example, from tides, this required height may vary and a system may be provided that allows adjustment of the height of the pumps 10a - 10b above the sea bed. This may be achieved by making the assembly including the out flow and return pipes 221, 222 buoyant and then adjusting the length of the connecting lines 218a - 218r. This may, for example, be done automatically using data from a GPS.

Alternatively, as seen in Figure 26, the pumps 10a - 10r could be secured onto the ocean floor directly and extended cables or rods 245a - 245r connect the buoyant floats 217a - 217r to the pumps 10a - 10r.

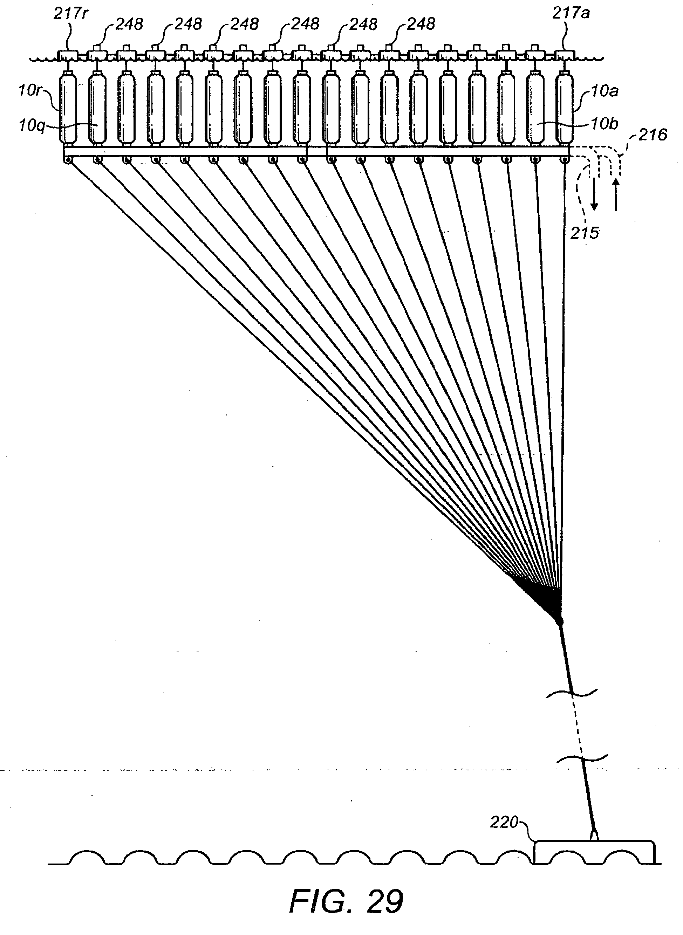

As described above with reference to the drawings, the outflow and return pipes 221, 222 will deliver the flow of liquid to a power generator (electricity generating turbine, reverse osmosis pumps etc.) to convert the wave energy into useful power. The power generator can be positioned at the same location or some distance from the energy converter e.g. on the sea bed or on land or on an offshore installation of some sort. However, a power generator 248 could be mounted on the energy converter system itself as seen in Figure 29. The remaining parts of Figure 29 are as described above with reference to Figures 17.

The energy converter can also deliver a flow of liquid to an accumulator or reservoir such that the energy can be stored as potential energy to meet future or fluctuating demands of power. Such an accumulator or reservoir can be in the form of an under sea reservoir (not shown) in which a large volume of pressurised liquid can be stored and then can deliver energy to the power generator as required. Such an accumulator could be in the form of a volume of liquid in a chamber which is pressurised by the force exerted onto it by a buoyant float or by pressurising it with gas or a weight. Some embodiments are described below.

In the embodiments described above with reference to the drawings, the energy absorber 216, 217/102 has taken the form of a generally spherical buoy. This need not be the case and, for some wave conditions, a spherical buoy may not offer the best configuration. Waves have a combination of motions commonly described as "pitch", "heave" and "surge". Pitch is the force generated by the change in angle of the wave surface between the peaks and troughs of a wave. Heave is the vertical motion resulting from the passage of successive wave peaks. Surge is the forward and reverse motion generated by travelling wave fronts that is usually most prominent close to shore..

A spherical buoy is good at absorbing energy from heave but less good as absorbing energy from surge and pitch. In addition, a spherical buoy is able to support only a single braid pump.

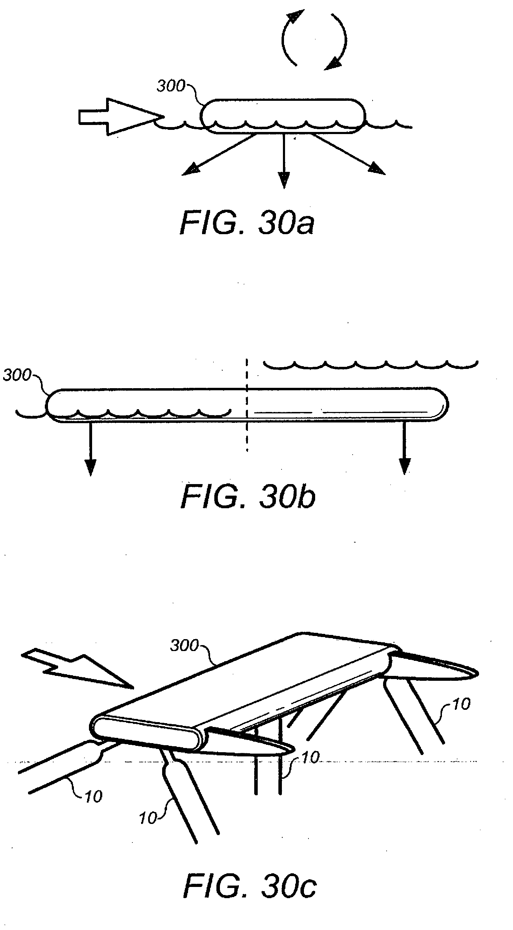

Referring next to Figure 30a; 30b and 30c, a second form of energy absorber is formed by a generally rectangular board 300 having a width much smaller than its length and a thickness less than its width. The board 300 may be an inflatable structure or a buoyant material or a combination of these. The board 300 is connected with its larger dimension parallel to the length of the ambient waves. Such a board can be used to support a number of braid pumps 10 extending at respective angles from the board 300 (see Figure 30c). The board 300 is good at absorbing energy from wave heave.

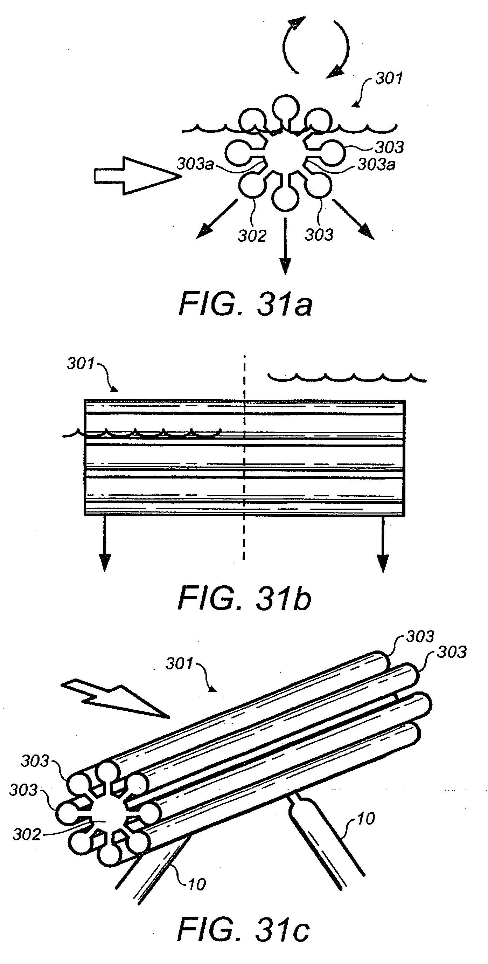

Referring next to Figures 31a, 31b and 31c, a third form of energy absorber 301 comprises a structure formed by a central elongate tube 302 surrounded by eight outer tubes 303 equiangularly spaced around the central tube 302 and connected to the central tube 302 by respective radially extending arms 303a (see Figures 31a and 31c). The tubes 302, 303 may be inflatable structures or buoyant materials or a combination of both The absorber 301 is orientated with its length parallel to the lengths of the waves and supports a plurality of braid pumps 10 (see Figures 31c). The energy absorber 301 of this embodiment is good at extracting energy from wave heave in offshore to far offshore locations. It will also absorb the elliptical/rotational energy from the rotating water particles beneath the water surface.

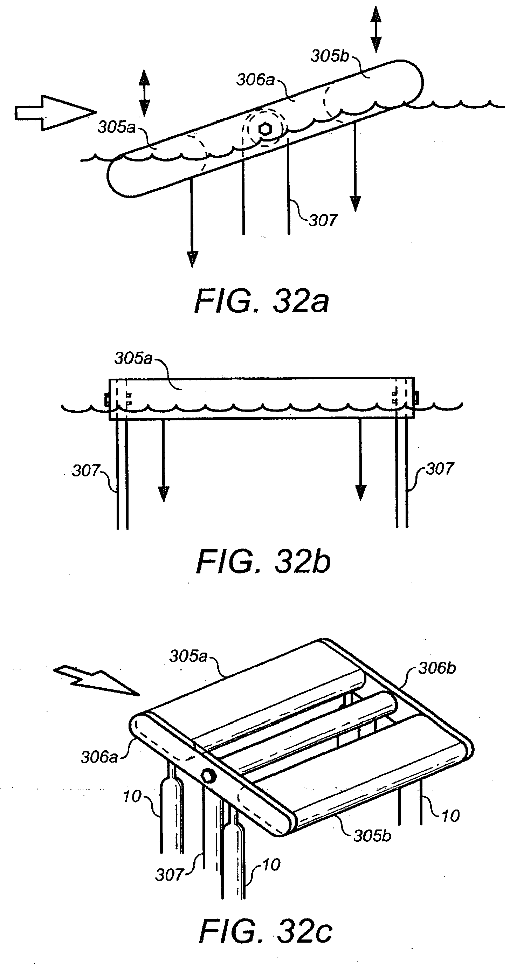

Referring next to Figures 32a, 32b and 32c, a fourth form of energy absorber 304 is for absorbing energy from pitch or pitch and heave. The energy absorber 304 comprises first and second board-shaped members 305a, 305b each constructed and arranged as the board 300 described above with reference to Figures 30a, 30b and 30c. The boards 305a, 305b are arranged parallel to but spaced from each other by first and second parallel links 306a, 306b. The first link 306a is connected between a first end of the first board 305a and a first end of the second board 305b. The second link 306b is connected between the second end of the first board 305a and a second end board 305b. Intermediate the ends, the first and second links 306a, 306b are mounted for pivotal movement on a support 307 anchored to the sea bed. A number of braid pumps 10 of any of the kinds described above with reference to the drawings are connected between the boards 305a, 305b and the sea bed (see Figure 31c).

The arrangement is most suitable for use in near shore and offshore positions where pitch is present as well as heave. The boards 305, 305b are arranged with their lengths (and with the pivot axis of the links 306a, 306b) parallel to the lengths of the waves. As a wave crest passes the energy absorber 304, the first board 305a is raised and the second board 305b is forced downwardly. This causes the braid pumps 10 associated with the first board 305a to expel sea water under pressure and the braid pumps associated with the second board 305b to fill with sea water. As the wave crest proceeds to the second board 305b (the position shown in Figure 32a) the reverse operation occurs.

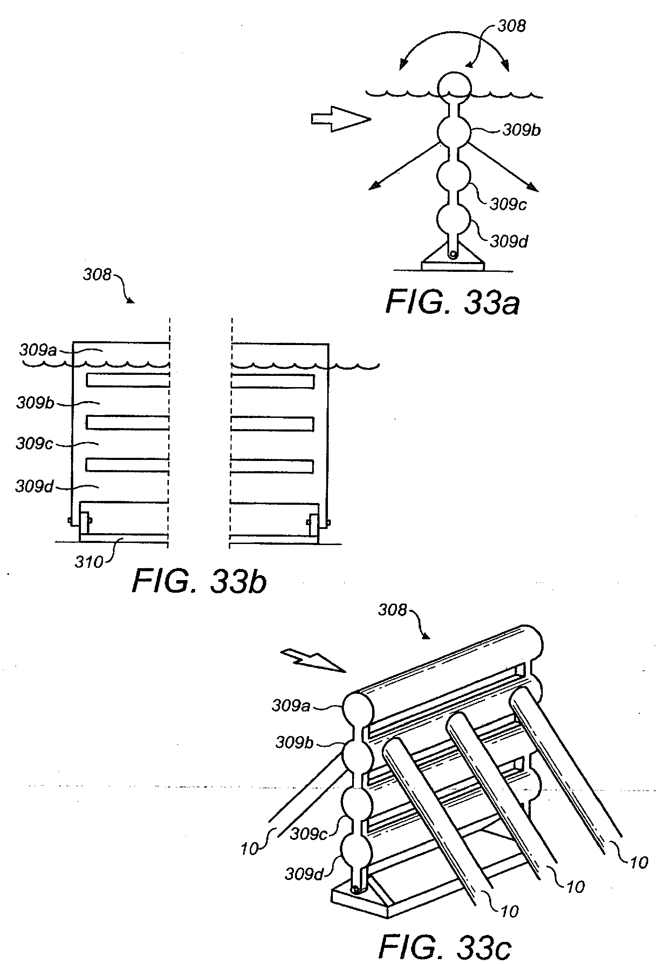

Referring next to Figures 33a, 33b and 33c a fifth form of energy absorber comprises a wall 308 formed by four parallel but spaced tubes 309a, 309b, 309c and 309d interconnected at their ends. The tubes 309a, 309b and 309c may be inflatable structures or buoyant materials or a combination of both This wall 308 is pivotally mounted on a base 310 fixed to the sea bed for movement about an axis parallel to the sea bed and parallel to the length of waves passing the wall 308.

As seen in Figure 33c, a number of braid pumps 10 are connected between the wall 308 and the sea bed with the braid pumps 10 extending at an angle to the wall and the sea bed.

The energy absorber 308 of Figures 33a, 33b and 33c is designed for use in near shore situations where wave surge is a significant force. Surge in one direction pivots the wall 308 in one sense to extend the braid pumps 10 to one side of the wall 308 and contract those to the other. Surge in the opposite direction reverses the pivoting movement of the wall 308 and reverses the action on the braid pumps 10.

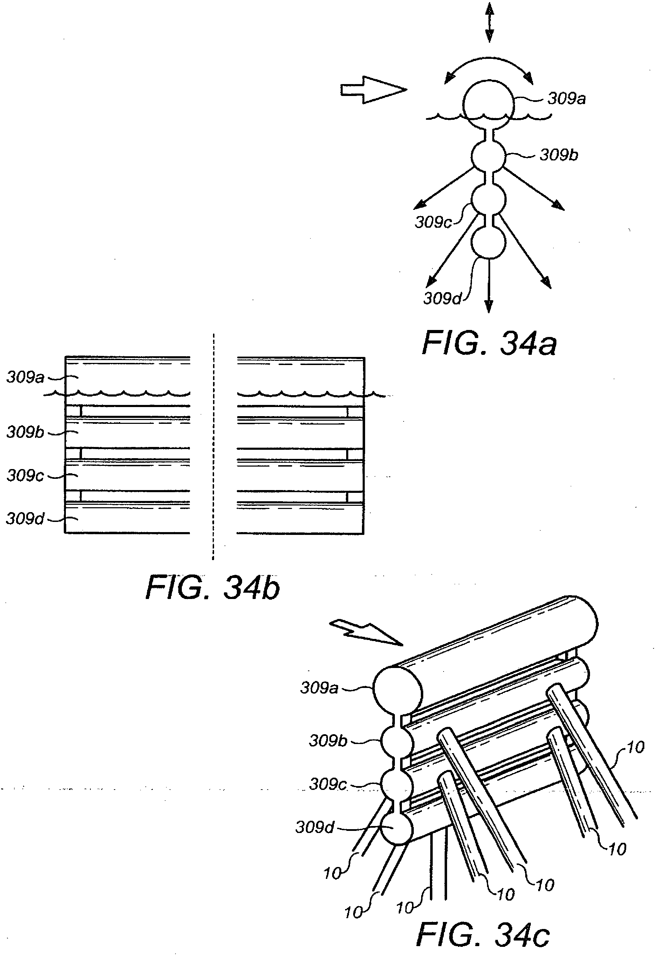

Referring next to Figures 34a, 34b, 34c, a sixth form of energy absorber 311 is formed by a wall 308 of the kind described above with reference to Figures 33a, 33b and 33c but the wall 308 is free to float with the uppermost tube 309a of larger diameter than the remaining tubes 309b, 309c and 309d and floating on the surface of the sear with the remaining tubes 309c, 309c 309d depending beneath. The wall 308 is aligned parallel to the lengths of the passing waves and braid pumps 10 are connected between the wall 308 and the sea bed.

The sixth energy absorber 311 is designed to absorb energy from heave and surge and can be positioned either near the shore or offshore.

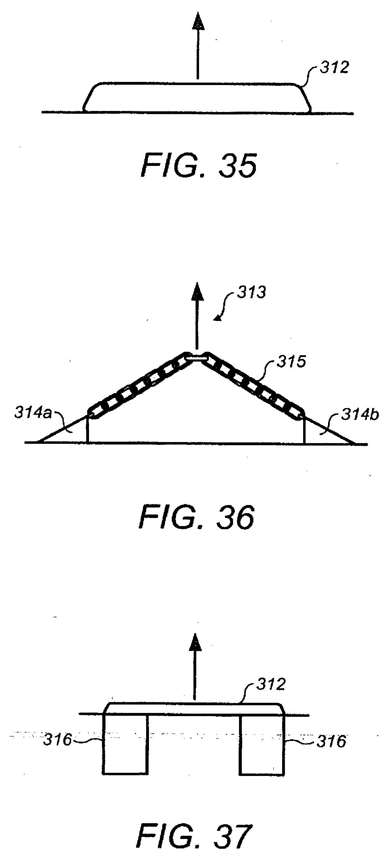

In the embodiments described above with reference to the drawings, the devices have been anchored to the sea bed by a fixed anchor. See the anchor 220 in Figure 18. An anchor of this type is shown in Figure 32 and is formed by a block of concrete 312 resting on the sea bed. The anchor may, however, take other forms and some of those are shown in Figures 36 to 40.

Referring first to Figure 36, a second form of anchor 313 comprises first and second spaced dead weights 314a, 314b interconnected by a chain 315. The chain 315 is connected to a braid pump 10 (not shown) and permits a degree of vertical movement and lateral movement to either side of the dead weights 314a, 314b.

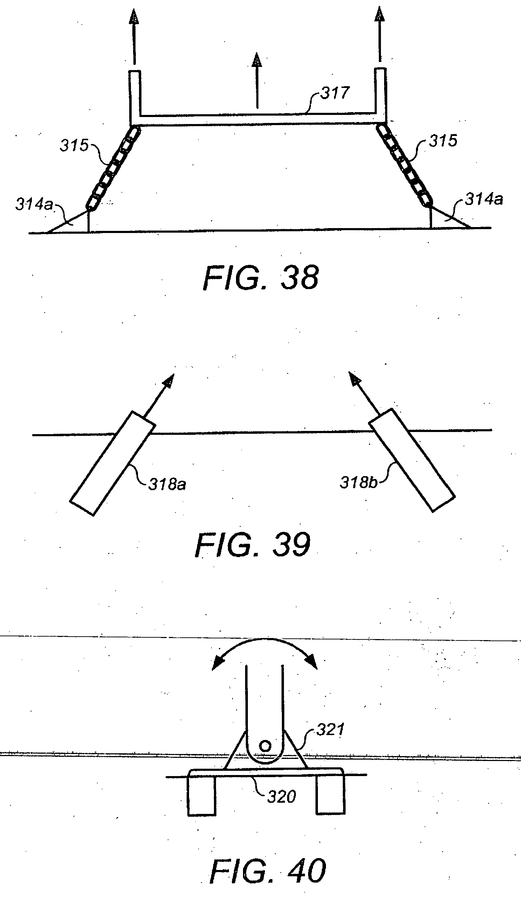

Referring next to Figures 37, the dead weight anchor 20 of Figure 35 may be anchored to the sea bed by piles 316. Reffering next to Figure 38, the anchor of Figure 36 may be modified by increasing the spacing between the dead weight 314a, 314b and inserting an elongate rigid bar 317 in the chain 315. The bar 37 provides attachment points for a number of braid pumps 10 and is designed to accommodate the movements encountered in heave and in pitch and heave.

Referring next to Figure 39, for braid pumps 10 operating in surge and heave and surge, angled piled anchors 318a, 318b may be used. For the energy absorber 304 of Figures 32a, 32b and 32c, the anchor 319 may be used with a piled plate 320 carrying a pivot mounting 321, as seen in Figure 40.

It is also known to use suction piling to anchor structures to the sea bed and such suction piles may be used in place of the anchors described above with reference to the drawings.

The braid pumps described above that are double acting or arranged in an array are capable of producing a continuous supply of pressurised water in favourable sea conditions. There may, however, be circumstances where the power provided is insufficient either due to the high demand or due to periods of low wave energy recovery.

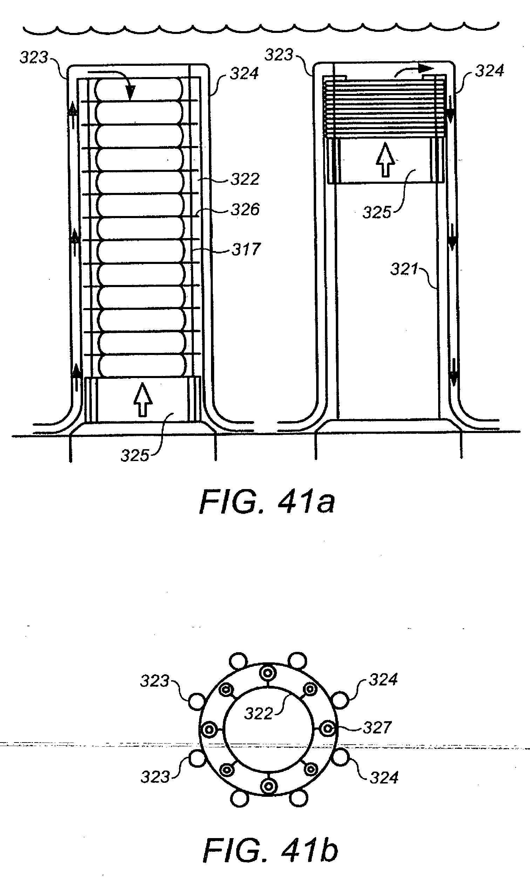

To accommodate those circumstances, the system may include an energy store capable of providing energy during such episodes. Referring next to Figures 41a and 41b, an energy store comprises a tower 321 containing a collapsible sleeve 322 connected at its upper end to an inlet 323 and an outlet 324 and defining a chamber. The sleeve 322 carries axially spaced guide rings 326 that are slidable along axially extending circumferentially spaced guide rods 327 arranged around the outer surface of the sleeve 322. The lower end of the sleeve 322 is connected to a float 325. In times of higher wave energy recovery, water, is passed into the sleeve 322 through the inlet 323 to extend the sleeve 322 against the action of the float 325. When additional energy is required, the outlet 324 opens and pressurised water is forced out of the sleeve 322 by the float 325.

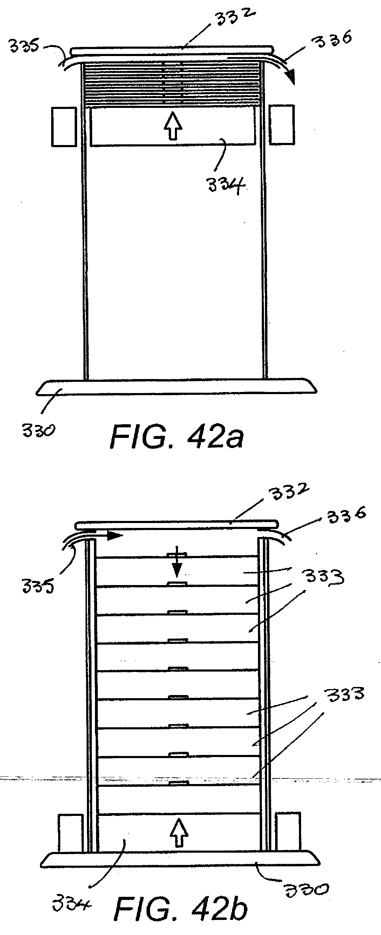

A second energy store is shown in Figures 42a and 42b. This comprises a base 330 from which extends a plurality of parallel rods 331 that terminate at a cap 332. A succession of flexible cylindrical chambers 333 are arranged between the cap 3332 and a float 334. The chambers 332 are in fluid connection with each other.

Pressurised water enters the uppermost chamber 333 through an inlet 335 and expands the uppermost chamber 333 against the action of the float 334 from the position shown in Figure 42a. Once the uppermost chamber 333 is filled, the next lowest is filled and so on. When the store is completely filled, it is as shown in Figure 42b. When the water is required for use, the inlet 335 is closed and an outlet 336 is opened and water exits under the pressure created by the float 334.

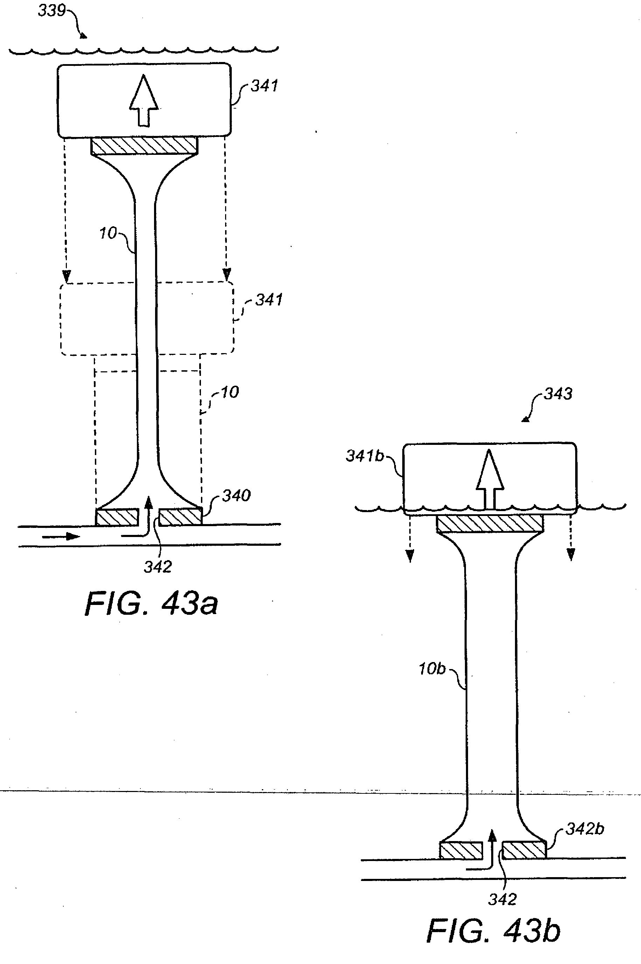

A third energy store is shown in Figures 43a and 43b. This store 339 is formed by a braid pump 10 of any of the kind described above with reference to the drawings connected between an anchor 340 and a float 341 that is located beneath the surface of the sea. Water is fed to the pump 10 through an inlet 342 in the anchor 340 and gradually expands the braid pump 10 against the anchor of the float 341 so that the braid pump 10 moves from the full line position of Figure 40a to the broken line position. Where additional energy is required, an outlet (not shown) is opened and the braid pump 10 discharges water under the anchor of the float 341, reversing the movement of the braid pump.

The store 439 of Figure 43a may be combined with a further store 343 shown in Figure 43b. This identical to the store of Figure 43a except that the float 341b is on the surface of the sea. As the tide rises and falls, the volume of the braid pump 10b of the further store 343 changes volume and on arising tides expels water into the braid pump 10 of the store 349. On a falling tide, the braid pump 10b receives water from the braid pump 10 of the third energy store 339. This flow of water between the stores 339, 343 can be used to drive a turbine (not shown) so extracting tidal energy.

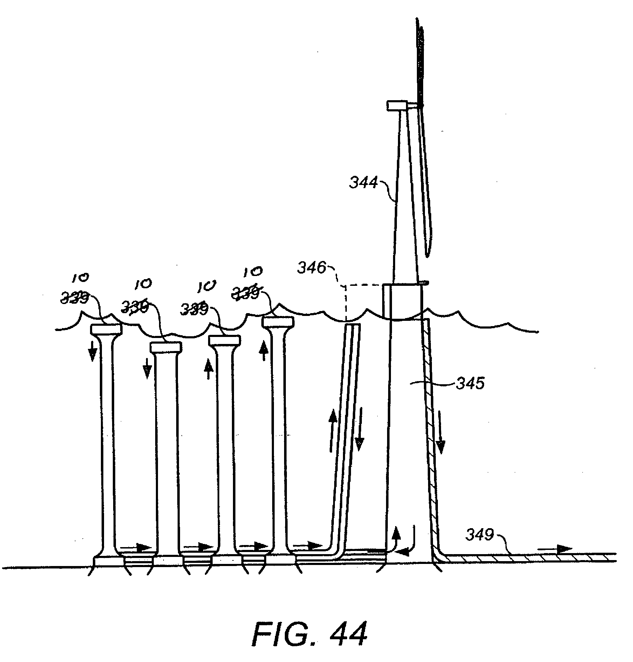

Referring next to Figure 44, energy stores of any of the kinds described above with reference to Figures 41a, 41b, 42a, 42b, 43a, 43b may be associated with an offshore wind turbine 344. The foundations 345 for the wind turbine 344 may be extended to support the energy stores 346 and the column 347 supporting the wind turbine 344 could be used as an energy store. The foundations 345 could support generators 346 for generating electricity that could be connected to shore through a common cable 349.

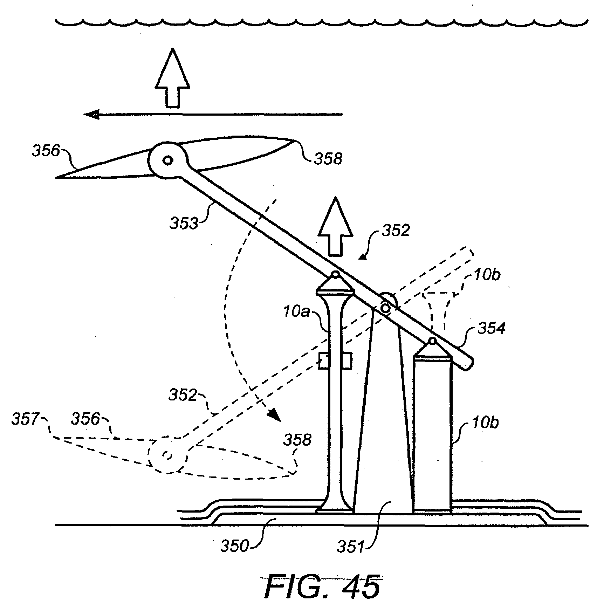

In the embodiments of the invention described above with reference to the drawings, the braid pump 10 has been used to absorb energy from waves. This need not be the case. For example, referring to Figures 45, tidal energy could be absorbed in the following way.

A platform 350 on the sea bed supports a generally vertical column 351. An arm 352 is pivoted about a generally horizontal axis at the upper end of the column 351 with a longer section 353 to one side of the pivot 354 and a shorter section 355 to the other side. Two braid pumps 10a, 10b of any of the kinds described above are connected respectively between the longer section 353 and the platform 350 and between the shorter section 355 and the platform 350 with the points of connection being equidistantly spaced on opposite sides of the pivot 354.

The first end of the longer arm section 353 carries a hydrofoil 356 pivotally mounted on the arm 352 for rotation about an axis normal to the plane the hydrofoil section. The hydrofoil 356 is orientated so that the tidal stream is normal to the leading and trailing edges 357, 358 of the hydrofoil 356.

In use, the angle of the hydrofoil 356 in a tidal stream is altered to cause the hydrofoil 356 to rise and fall in the stream. This causes the arms 352 to rotate about the pivot 354 and so alternatively compress and elongate each of the braid pumps 10a, 10b so causing water to be drawn into and expelled from each of the braid pumps 10a, 10b. The expelled water can be used, for example, to drive a turbine, as described above.

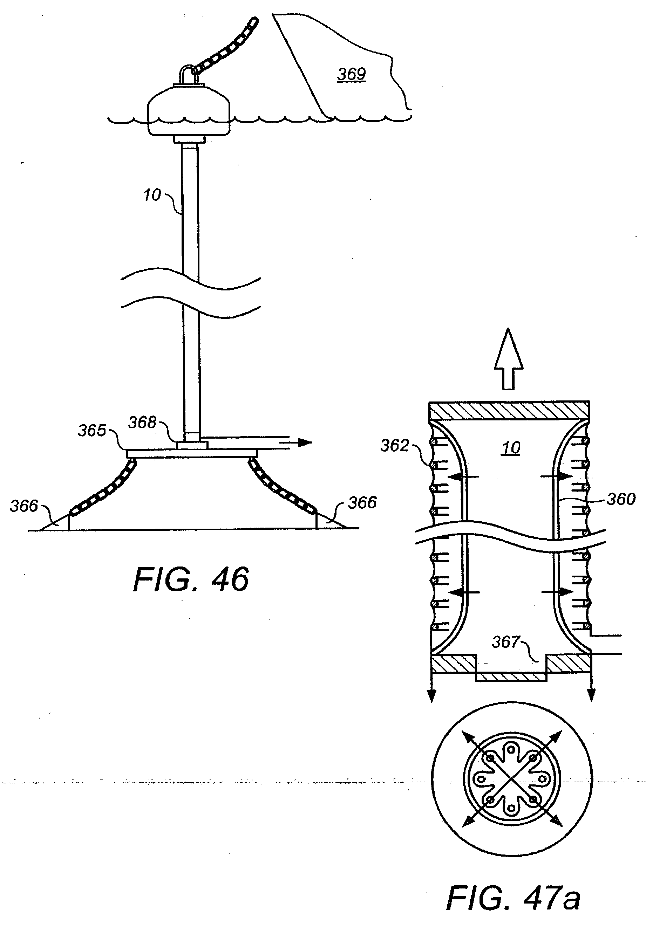

Referring next to Figures 46, 47a, 47b, 48a, 48b and 49, a braid pump 10 of the kinds described above can be used to provide fresh water from sea water by reverse osmosis.

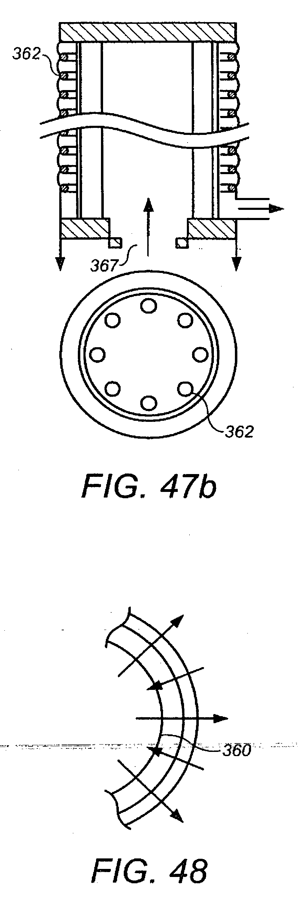

In this arrangement, the bladder of the braid pump 10 is formed by a reverse osmosis membrane 360 and the pump 10 is surrounded by a sleeve 361 incorporating a spring 362 tending to collapse the sleeve 361. The upper ends of the pump 10 and the sleeve 361 are connected to a float 363 that may, as seen in Figures 46, be a mooring buoy. The lower ends of the pump 10 and the sleeve 361 and connected to an anchor 364 formed by a plate 365 connected to spaced dead weights 366 by chains 367. The lower end of the pump 10 includes a valve controlled inlet 367 and the space between the pump 10 and the sleeve 361 is connected to an outlet pipe 368. This is best seen in Figures 47a, 47b, 48a and 48b

In use, as the float 363 rises on a tide, the pump 10 is elongated and water within the pump 10 is compressed (see Figures 47a, 47b). A float 363 having a displacement of 10 tonnes can create a pressure of 70-110 Bar within the pump 10. This forces the sea water through the reverse osmosis membrane 360 to produce fresh water in the space between the pump 10 and the sleeve 361 (see Figures 47a, 47b). As the tide falls (see Figures 48a, 48b) the pump 10 is collapsed under the action of the spring 362. This increases the volume of the pump 10 so drawing water into the pump through the inlet 367. At the same time, the increasing volume of the pump 10 decreases the volume of the space between the pump 10 and the sleeve 361 so forcing the fresh water in this space out through the outlet pipe 368 for use. This cycle is repeated on subsequent tides to provide a supply of fresh water that may be used, for example, by a ship 369 moored to the float 363.

In the embodiments of the invention described above with reference to the drawings, the radial compression of the container 1 is achieved by axial lengthening of a braid sleeve 12. This has a number of advantages including the strength of braids and their ability to apply high compressive loads.

## Claims

1. A pump comprising a flexible container (11) filled with a fluid and having a fluid inlet (104) and a fluid outlet (105), and a constricting device (12) conforming the container (11) to a generally circular cross-section and operable cyclically to reduce the diameter of the container (11) to expel fluid from the outlet (105) and then allow the diameter to increase with fluid entering the inlet (104) to refill the container (11), **characterised in that** the constricting device comprises a braid tube (12) acting on the container (11).

2. A pump according to claim 1 wherein the constricting device comprises means for applying an axial force to the braid tube (12) to extend the braid tube (12) to reduce the diameter of the braid tube (12) to reduce the diameter of the container (11), the diameter of the container (11) increasing when the axial force is removed.

3. A pump according to claim 1 or claim 2 and including an energy conversion device (120; 217; 300; 301; 308; 352) for converting energy from a natural source of energy into said cyclical movement of the container (11) to pump the fluid.

4. A pump according to claim 3 wherein the energy conversion device comprises a float (120; 217; 300; 301; 308) and the constricting device comprises a braid tube (12), the container (11) and the braid tube (12) being located between an anchor and the float (101; 120; 217; 300; 301; 308) so that, when disposed in the sea with the anchor on the seabed and the float (101; 120; 217; 300; 301; 308) on the sea surface, a cyclical motion of the sea water successively extends the braid tube (12) and the container (11) and then allows the braid tube (12) and the container (11) to contact.

5. A pump according to claim 4 and including a retractor (107) that, in the absence of an extending force from the float, contracts the braid tube (12) and the container (11) to draw fluid into the container (11) through said inlet.

6. A pump according to claim 5 wherein the retractor (107) is formed by the container (11), the container (11) being resiliently elastically deformed when extended and contracting to expand the braid tube (12) in the absence of an extending force from the float.

7. A pump according to claim 1 and including an electrical generator (121), the outlet from the container (11) passing fluid to the generator (121) to drive the generator (121), the fluid exiting the generator (121) being stored under pressure, said stored pressurised fluid being passed to the container (11) in the absence of an extending force from the float to expand the braid tube (12) and fill the container (11).

8. A pump according to claim 7 and including a reservoir (124), the fluid from the generator (121) passing to the reservoir (124) before being passed to the container (11), the reservoir (124) including means for pressurising the fluid in the container (11).

9. A pump according to claim 4 and including a second pump, the second pump (10a) providing an output of pressurised fluid when the braid tube (12) is expanding and the container (11) is increasing in diameter.

10. A pump according to claim 9 wherein the braid tube (12) and the container (11) are surrounded by a longitudinally extendable and contractible sleeve (108) forming an annular chamber around the braid tube (12) and the container (11), the chamber having a fluid inlet and a fluid outlet, the sleeve (108) extending as the braid tube (12) is elongated to increase the volume of the chamber to draw in fluid to the chamber through said inlet and contracting as the braid tube (12) is expanded to force fluid under pressure from the chamber through the chamber outlet.

11. A pump according to claim 9 wherein the second pump 10a) comprises a second braid tube (12) and a second container (11) according to any one of claims 1 to 3.

12. A pump according to claim 11 wherein the first-mentioned braid tube (12) and container (11) are connected between the float and a mounting connected to an anchor for anchoring on the sea bed, the second braid tube (12) depending from the intermediate mounting and carrying a deadweight at a lower end thereof, the pump including a generator (121), the first-mentioned and the second containers (11) having respective outlets connectable to an inlet of the generator (121) and the generator (121) having an outlet connectable to the first-mentioned and second containers (11), upward movement of the float contracting the first-mentioned braid tube (12) to pass fluid from the associated outlet to the generator (121), fluid exiting the generator (121) outlet passing to the second container (11) to expand and fill the second container (11), downward movement of the float allowing the deadweight to extend the second braid tube (12) to pass fluid from the associated outlet to the generator (121) inlet to drive the generator (121), fluid passing from the generator (121) outlet to the first-mentioned container (11) to expand the braid tube (12) and fill the first-mentioned container (11).

13. A pump according to claim 3 wherein the energy conversion device comprises a member (304; 308) pivotable about an axis generally parallel to a surface of a body of water, said body of water providing energy to pivot said member (304; 308), said pivotal movement extending the braid tube (12) and allowing the braid tube (12) to contract.

14. A pump according to claim 3 for use in sea heave and/or surge wherein the energy conversion device comprises a buoyant member (301; 3110 having at least a portion for extension beneath the sea surface, the pump (10) being connected between the buoyant member and an anchor.

15. pump according to any one of claims 1 to 14 in combination with a store (321; 333; 339), the store receiving fluid under pressure from the or each pump and holding said fluid under pressure, the fluid being able to be outputted from the store to provide a source of pressurised fluid.

16. A method of converting sea energy comprising suspending a pump according to any one of claims 1 to 15 in the sea between an anchor and means for converting energy from the sea into a force acting on said constricting device to cause the constricting device to reduce the diameter of the container to expel fluid from the outlet, and then passing the expelled fluid to do work

## Patentansprüche

1. Pumpe, umfassend einen flexiblen Behälter (11), der mit einem Fluid gefüllt ist und einen Fluideinlass (104) und einen Fluidauslass (105) aufweist, und eine Verengungsvorrichtung (12), die den Behälter (11) zu einem im Wesentlichen runden Querschnitt anpasst und zyklisch betrieben werden kann, um den Durchmesser des Behälters (11) zum Ausstoßen von Fluid aus dem Auslass (105) zu reduzieren, wonach der Durchmesser durch Fluid, das durch den Einlass (104) zum Wiederauffüllen des Behälters (11) eintritt, erhöht werden kann, **dadurch gekennzeichnet, dass** die Verengungsvorrichtung einen Flechtschlauch (12) umfasst, der auf den Behälter (11) einwirkt.

2. Pumpe nach Anspruch 1, wobei die Verengungsvorrichtung Mittel zum Anlegen einer axialen Kraft an den Flechtschlauch (12) umfasst, um den Flechtschlauch (12) auszudehnen, um den Durchmesser des Flechtschlauchs (12) zum Reduzieren des Durchmessers des Behälters (11) zu reduzieren, wobei der Durchmesser des Behälters (11) zunimmt, wenn die axiale Kraft entfernt wird.

3. Pumpe nach Anspruch 1 oder Anspruch 2, aufweisend eine Energie-Umwandlungsvorrichtung (120; 217; 300; 301; 308; 352) zum Umwandeln von Energie aus einer natürlichen Energiequelle zur zyklischen Bewegung des Behälters (11) zum Pumpen des Fluids.

4. Pumpe nach Anspruch 3, wobei die Energie-Umwandlungsvorrichtung einen Schwimmer (120; 217; 300; 301; 308) umfasst und die Verengungsvorrichtung einen Flechtschlauch (12) umfasst, wobei der Behälter (11) und der Flechtschlauch (12) zwischen einem Anker und dem Schwimmer (101, 120; 217; 300; 301; 308) angeordnet sind, so dass, wenn sie im Meer mit dem Anker auf dem Meeresboden und dem Schwimmer (101; 120; 217; 300; 301; 308) an der Meeresoberfläche angeordnet werden, eine zyklische Bewegung des Meerwassers den Flechtschlauch (12) und den Behälter (11) immer weiter ausdehnt, wodurch ermöglicht wird, dass der Flechtschlauch (12) und der Behälter (11) in Kontakt treten.

5. Pumpe nach Anspruch 4 und aufweisend einen Aufroller (107), sodass bei Nichtvorhandensein einer ausdehnenden Kraft vom Schwimmer der Flechtschlauch (12) zusammengezogen wird und der Behälter (11) durch den Einlass Fluid in den Behälter (11) zieht.

6. Pumpe nach Anspruch 5, wobei der Aufroller (107) durch den Behälter (11) gebildet wird, wobei der Behälter (11) elastisch verformt wird, wenn er ausgedehnt und zusammengezogen wird, um den Flechtschlauch (12) bei Abwesenheit einer ausdehnenden Kraft vom Schwimmer auszudehnen.

7. Pumpe nach Anspruch 1 und aufweisend einen Stromgenerator (121), wobei der Auslass des Behälters (11) Fluid zum Generator (121) leitet, um den Generator (121) anzutreiben, wobei das Fluid, das den Generator (121) verlässt, unter Druck steht, wobei das gespeicherte, druckbeaufschlagte Fluid zum Behälter (11) geleitet wird, wenn keine ausdehnende Kraft vom Schwimmer zum Ausdehnen des Flechtschlauchs (12) und Füllen des Behälters (11) vorhanden ist.

8. Pumpe nach Anspruch 7 und aufweisend einen Vorratsbehälter (124), wobei das Fluid aus dem Generator (121) vorbei in den Vorratsbehälter (124) vor Weiterleiten davon in den Behälter (11) geleitet wird, wobei der Vorratsbehälter (124) Mittel zum Druckbeaufschlagen des Fluids in dem Behälter (11) aufweist.

9. Pumpe nach Anspruch 4 und aufweisend eine zweite Pumpe, wobei die zweite Pumpe (10a) einen Ausgang für druckbeaufschlagtes Fluid bereitstellt, wenn sich der Flechtschlauch (12) ausdehnt und der Durchmesser des Behälters (11) zunimmt.

10. Pumpe nach Anspruch 9, wobei der Flechtschlauch (12) und der Behälter (11) durch eine in Längsrichtung ausdehnbare und zusammenziehbare Hülse (108) umgeben werden, die eine ringförmige Kammer um den Flechtschlauch (12) und den Behälter (11) bildet, wobei die Kammer einen Fluideinlass und einen Fluidauslass aufweist, wobei sich die Hülse (108) ausdehnt, während der Flechtschlauch (12) lang gezogen wird, um das Volumen der Kammer zum Ziehen von Fluid in die Kammer durch den Einlass zu erhöhen, und zusammenzieht, während der Flechtschlauch (12) ausgedehnt wird, um Fluid unter Druck aus der Kammer durch den Kammerauslass zu drängen.

11. Pumpe nach Anspruch 9, wobei die zweite Pumpe (10a) einen zweiten Flechtschlauch (12) und einen zweiten Behälter (11) nach einem der Ansprüche 1 bis 3 aufweist.

12. Pumpe nach Anspruch 11, wobei der erstgenannte Flechtschlauch (12) und Behälter (11) zwischen dem Schwimmer und einer Halterung verbunden sind, die mit einem Anker zum Verankern am Meeresboden verbunden ist, wobei der zweite Flechtschlauch (12) von der Zwischenhalterung abhängig ist und ein Leergewicht an einem unteren Ende davon trägt, wobei die Pumpe einen Generator (121) aufweist, wobei der erstgenannte und der zweite Behälter (11) zugehörige Auslässe aufweisen, die mit einem Einlass des Generators (121) verbunden werden können, und wobei der Generator (121) einen Auslass aufweist, der mit dem erstgenannten und dem zweiten Behälter (11) verbunden werden kann, wobei eine Aufwärtsbewegung des Schwimmers den erstgenannten Flechtschlauch (12) zusammenzieht, um Fluid aus dem zugehörigen Auslass zum Generator (121) zu leiten, wobei das Fluid, das den Auslass des Generators (121) verlässt, zum zweiten Behälter (11) läuft, um den zweiten Behälter (11) auszudehnen und zu füllen, wobei die Abwärtsbewegung des Schwimmers dem Leergewicht ermöglicht, den zweiten Flechtschlauch (12) auszudehnen, um Fluid von dem zugehörigen Auslass zum Einlass des Generators (121) zum Antreiben des Generators (121) zu leiten, wobei Fluid aus dem Auslass des Generators (121) zu dem erstgenannten Behälter (11) zum Ausdehnen des Flechtschlauchs (12) und Füllen des erstgenannten Behälters (11) geleitet wird.

13. Pumpe nach Anspruch 3, wobei die Energieumwandlungsvorrichtung ein Element (304; 308) umfasst, das um eine Achse schwenkbar ist, die allgemein parallel zur Oberfläche eines Wasserkörpers verläuft, wobei der Wasserkörper die Energie zum Schwenken des Elements (304; 308) bereitstellt, wobei die Schwenkbewegung den Flechtschlauch (12) ausdehnt und zulässt, dass sich der Flechtschlauch (12) zusammenzieht.

14. Pumpe nach Anspruch 3 zur Verwendung in Meereshieve und/oder -brandung, wobei die Energieumwandlungsvorrichtung ein schwimmendes Element (301; 3110 umfasst, das mindestens einen Abschnitt zur Ausdehnung unter der Meeresoberfläche aufweist, wobei die Pumpe (10) zwischen dem schwimmenden Element und einem Anker verbunden ist.

15. Pumpe nach einem der Ansprüche 1 bis 14 in Kombination mit einem Speicher (321; 333; 339), wobei der Speicher unter Druck stehendes Fluid von der oder jeder Pumpe aufnimmt und das Fluids unter Druck hält, wobei das Fluid aus dem Speicher zum Bereitstellen einer Quelle aus Druckfluid ausgegeben wird.

16. Verfahren zum Umwandeln von Meeresenergie, umfassend das Suspendieren einer Pumpe nach einem der Ansprüche 1 bis 15 im Meer zwischen einem Anker und Mitteln zum Umwandeln von Energie aus dem Meer zu einer Kraft, die auf die Verengungsvorrichtung einwirkt, um zu bewirken, dass die Verengungsvorrichtung den Durchmesser des Behälters zum Ausstoßen von Fluid aus dem Auslass reduziert und dann das ausgestoßene Fluid weiterleitet, um Arbeit zu verrichten.

## Revendications

1. Pompe comportant un récipient souple (11) rempli d'un fluide et doté d'une entrée (104) de fluide et d'une sortie (105) de fluide, et un dispositif (12) d'étranglement imposant au récipient (11) une section droite généralement circulaire et susceptible d'être actionné cycliquement pour réduire le diamètre du récipient (11) de façon à expulser du fluide à partir de la sortie (105) puis à permettre au diamètre d'augmenter avec l'entrée de fluide dans l'entrée (104) pour réalimenter le récipient (11), **caractérisé en ce que** le dispositif d'étranglement comporte un tube tressé (12) agissant sur le récipient (11).

2. Pompe selon la revendication 1, le dispositif d'étranglement comportant un moyen servant à appliquer un effort axial au tube tressé (12) pour allonger le tube tressé (12) afin de réduire le diamètre du tube tressé (12) pour réduire le diamètre du récipient (11), le diamètre du récipient (11) augmentant lorsque l'effort axial est supprimé.

3. Pompe selon la revendication 1 ou la revendication 2, comprenant un dispositif (120 ; 217 ; 300 ; 301 ; 308 ; 352) de conversion d'énergie servant à convertir de l'énergie provenant d'une source naturelle d'énergie en ledit mouvement cyclique du récipient (11) pour pomper le fluide.

4. Pompe selon la revendication 3, le dispositif de conversion d'énergie comportent un flotteur (120 ; 217 ; 300 ; 301 ; 308) et le dispositif d'étranglement comportant un tube tressé (12), le récipient (11) et le tube tressé (12) étant situés entre une ancre et le flotteur (101 ; 120 ; 217 ; 300 ; 301 ; 308) de telle sorte que, lorsqu'ils sont disposés dans la mer, l'ancre se trouvant sur le fond marin et le flotteur (101 ; 120 ; 217 ; 300 ; 301 ; 308) se trouvant sur la surface de la mer, un mouvement cyclique de l'eau de mer, successivement, allonge le tube tressé (12) et le récipient (11) puis laisse le tube tressé (12) et le récipient (11) se contracter.

5. Pompe selon la revendication 4, comprenant un rétracteur (107) qui, en l'absence d'un effort d'allongement provenant du flotteur, contracte le tube tressé (12) et le récipient (11) pour aspirer du fluide dans le récipient (11) à travers ladite entrée.

6. Pompe selon la revendication 5, le rétracteur (107) étant formée par le récipient (11), le récipient (11) étant déformé élastiquement de manière souple lorsqu'il est allongé et se contractant pour dilater le tube tressé (12) en l'absence d'un effort d'allongement provenant du flotteur.

7. Pompe selon la revendication 1, comprenant un générateur électrique (121), la sortie en provenance du récipient (11) transférant du fluide au générateur (121) pour entraîner le générateur (121), le fluide quittant le générateur (121) étant stocké sous pression, ledit fluide stocké sous pression étant transféré au récipient (11) en l'absence d'un effort d'allongement en provenance du flotteur pour dilater le tube tressé (12) et remplir le récipient (11).

8. Pompe selon la revendication 7, comprenant un réservoir (124), le fluide en provenance du générateur (121) passant dans le réservoir (124) avant d'être transféré au récipient (11), le réservoir (124) comprenant un moyen servant à mettre sous pression le fluide dans le récipient (11).

9. Pompe selon la revendication 4, comprenant une deuxième pompe, la deuxième pompe (10a) assurant une production de fluide sous pression lorsque le tube tressé (12) se dilate tandis que le récipient (11) augmente de diamètre.

10. Pompe selon la revendication 9, le tube tressé (12) et le récipient (11) étant entourés par un fourreau (108) capable de s'allonger et de se contracter longitudinalement formant une chambre annulaire autour du tube tressé (12) et du récipient (11), la chambre étant dotée d'une entrée de fluide et d'une sortie de fluide, le fourreau (108) s'allongeant à mesure que le tube tressé (12) est étiré pour augmenter le volume de la chambre afin d'aspirer du fluide vers la chambre à travers ladite entrée et se contractant à mesure que le tube tressé (12) est dilaté pour chasser du fluide sous pression de la chambre à travers la sortie de la chambre.

11. Pompe selon la revendication 9, la deuxième pompe (10a) comportant un deuxième tube tressé (12) et un deuxième récipient (11) selon l'une quelconque des revendications 1 à 3.

12. Pompe selon la revendication 11, les premiers tube tressé (12) et récipient (11) mentionnés étant raccordés entre le flotteur et un support relié à une ancre destinée à s'ancrer sur le fond marin, le deuxième tube tressé (12) étant rattaché au support intermédiaire et portant un lest à une extrémité inférieure de celui-ci, la pompe comprenant un générateur (121), les premier et deuxième récipient (11) mentionnés étant dotés de sorties respectives susceptibles d'être reliées à une entrée du générateur (121) et le générateur (121) étant doté d'une sortie susceptibles d'être reliée aux premier et deuxième récipient (11) mentionnés, un mouvement ascendant du flotteur contractant le premier tube tressé (12) mentionné pour transférer du fluide de la sortie associée au générateur (121), du fluide quittant la sortie du générateur (121) passant vers le deuxième récipient (11) pour dilater et remplir le deuxième récipient (11), un mouvement descendant du flotteur permettant au lest d'allonger le deuxième tube tressé (12) pour transférer du fluide de la sortie associée à l'entrée du générateur (121) pour entraîner le générateur (121), du fluide passant de la sortie du générateur (121) au premier récipient (11) mentionné pour dilater le tube tressé (12) et remplir le premier récipient (11) mentionné.

13. Pompe selon la revendication 3, le dispositif de conversion d'énergie comportant un élément (304 ; 308) pouvant pivoter autour d'un axe généralement parallèle à une surface d'une étendue d'eau, ladite étendue d'eau fournissant une énergie pour faire pivoter ledit élément (304 ; 308), ledit mouvement de pivot allongeant le tube tressé (12) et laissant le tube tressé (12) se contracter.

14. Pompe selon la revendication 3 destinée à une utilisation en présence d'un pilonnement et/ou d'un cavalement marin, le dispositif de conversion d'énergie comportant un élément (301 ; 3110 de flottabilité dont au moins une partie est destinée à s'étendre sous la surface de la mer, la pompe (10) étant raccordée entre l'élément de flottabilité et une ancre.

15. Pompe selon l'une quelconque des revendications 1 à 14 en combinaison avec une réserve (321 ; 333 ; 339), la réserve recevant du fluide sous pression en provenance de la ou de chaque pompe et retenant ledit fluide sous pression, le fluide pouvant être délivré à partir de la réserve pour constituer une source de fluide sous pression.

16. Procédé de conversion d'énergie marine, comportant les étapes consistant à suspendre une pompe selon l'une quelconque des revendications 1 à 15 dans la mer entre une ancre et un moyen servant à convertir une énergie provenant de la mer en un effort agissant sur ledit dispositif d'étranglement pour faire en sorte que le dispositif d'étranglement réduise le diamètre du récipient afin d'expulser du fluide à partir de la sortie, puis de transférer le fluide expulsé pour accomplir un travail.
